(19) **Europäisches Patentamt European Patent Office Office européen des brevets**

(11) **EP 4 445 334 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **22808952.0**

(22) Anmeldetag: **10.11.2022**

(51) Internationale Patentklassifikation (IPC):
**G06T 7/80** (2017.01)

(52) Gemeinsame Patentklassifikation (CPC):
**G06T 7/80;** G06T 2207/30252

(86) Internationale Anmeldenummer:
**PCT/DE2022/200263**

(87) Internationale Veröffentlichungsnummer:
**WO 2023/104254 (15.06.2023 Gazette 2023/24)**

(54) **DYNAMISCHE AUTOKALIBRIERUNG EINES FAHRZEUGKAMERASYSTEMS HINTER EINER WINDSCHUTZSCHEIBE**

DYNAMIC AUTO-CALIBRATION OF A VEHICLE CAMERA SYSTEM BEHIND A WINDSHIELD

AUTO-ÉTALONNAGE DYNAMIQUE D'UN SYSTÈME DE CAMÉRA DE VÉHICULE DERRIÈRE UN PARE-BRISE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **09.12.2021 DE 102021214040**

(43) Veröffentlichungstag der Anmeldung:
**16.10.2024 Patentblatt 2024/42**

(73) Patentinhaber: **AUMOVIO Autonomous Mobility Germany GmbH
85057 Ingolstadt (DE)**

(72) Erfinder:
• **LASARUK, Aless
88131 Lindau (DE)**
• **HACHFELD, Felix
88131 Lindau (DE)**

(74) Vertreter: **Aumovio Corporation
Continental Automotive
Technologies GmbH
Putzbrunner Straße 69
81739 München (DE)**

(56) Entgegenhaltungen:
EP-B1- 3 293 701    WO-A1-2021/004642
DE-A1- 102016 222 548    DE-A1- 102018 204 451

**Beschreibung**

Die Erfindung betrifft ein Verfahren und eine Vorrichtung zur Autokalibrierung eines Fahrzeugkamerasystems, welche insbesondere im Fahrzeug als Sensorsystem für Fahrerassistenzsysteme und Automatisiertes Fahren verwendet werden kann und durch eine Scheibe die Umgebung erfasst.

DE 102018204451 A1 zeigt ein Verfahren und eine Vorrichtung zur Autokalibrierung einer monokularen Fahrzeugkamera. Das Verfahren weist folgende Schritte auf:

a) Erfassen einer Folge von Bildern der Fahrzeugkamera, wobei die Fahrzeugkamera einen Bereich der Umgebung vor dem Fahrzeug abbildet,

b) Erkennen einer für eine Autokalibrierung geeigneten Kurvenfahrt des Fahrzeugs, wenn der vom Fahrzeug beschriebene Kurvenradius kleiner oder gleich einem definierten Maximalradius und der verstrichene Kurvenwinkel größer oder gleich einem definierten Mindestwinkel ist,

c) Durchführen einer Autokalibrierung, wenn mindestens eine für die Autokalibrierung geeignete Kurvenfahrt erkannt wurde, wobei

d) die Autokalibrierung unter Berücksichtigung einer Bewegung von stationären Objekten in der Umgebung des Fahrzeugs in einer für die Autokalibrierung geeigneten Kurvenfahrt erfolgt.

Auch aus der WO2021/004642A1 ist ein Verfahren zur Kamerakalibrierung bekannt geworden, mittels welchem eine Projektionsfunktion der Kamera ermittelbar ist. Die Kamera ist hinter einer transparenten Scheibe angeordnet.

Kamerakalibrierung ist ein essentieller Bestandteil der Umgebungserfassung eines Fahrerassistenzsystems (Advanced Driver Assistance System, ADAS) oder eines Systems für automatisiertes Fahren (Automated Driving, AD) durch ein im oder am Fahrzeug angebrachtes Kamerasystem. Das Kamerasystem vollzieht die Bewegungen des Fahrzeugs nach bzw. durchläuft diese ebenfalls. Zur Kamerakalibrierung werden durch ein Schätzverfahren die Parameter einer formalen Relation (Projektion) zwischen dreidimensionalen Raumpunkten und entsprechenden Bildpunkten eines physikalischen Kamerasystems ermittelt. Die ermittelten Parameter werden anschließend zur Weiterverwendung im ADAS-System abgelegt. Die Projektionsvorschrift beinhaltet eine Beschreibung der Pfade der Lichtausbreitung innerhalb des optischen Systems der Kamera (intrinsische Parameter) sowie die Position und Orientierung in Bezug auf ein fest referenziertes Koordinatensystem am Fahrzeug (extrinsische Parameter).

Sind die Parameter der Projektionsvorschrift genau ermittelt, so ist während der Fahrt eine vermessende Erfassung der räumlichen Umgebung des Fahrzeuges mit Structure-From-Motion (SFM)- oder Mehransichten-Verfahren möglich. Weichen die Parameter der Projektionsvorschrift geringfügig von der tatsächlichen Projektionsvorschrift ab, so kann dies zu ungenauen Ergebnissen nachfolgender Verfahren führen, welche die aus Bilddaten der Kamera ermittelte Distanz (z.B. Adaptive Cruise Control, ACC oder Notbremsassistent, d.h. Emergency Braking Assist, EBA bzw. Automatische Notbremsung, d.h. Automatic Emergency Braking, AEB) oder den Winkel (z.B. Spurhalteassistenz, d.h. Lane Keeping Assistance, LKA oder Automatische Fernlichtsteuerung bzw. Head Lamp Assist, HLA) zu abgebildeten Objekten benutzen. Weichen die Parameter der Projektionsvorschrift stark von der tatsächlichen Projektionsvorschrift ab, so kann es dazu führen, dass das ADAS/AD-System eingeschränkt bzw. nicht verfügbar ist (kurzzeitiger bzw. permanenter Ausfall).

Typischerweise wird eine ADAS-Kamera im Fahrzeug hinter einer Windschutzscheibe oder einem Schutzglas eines Fahrzeuges eingesetzt. Die (Windschutz-) Scheibe stellt ein zusätzliches optisches System dar und verändert maßgeblich die oben beschriebene Projektionsvorschrift einer Kamera gegenüber einem Aufbau, in dem keine Windschutzscheibe zwischen der Szene und der Kamera vorhanden ist. Um eine genaue Funktionsweise der nachfolgenden Verfahren zu gewährleisten, ist es erforderlich, die Windschutzscheibe bei der Kamerakalibrierung zu berücksichtigen.

Ein etablierter Prozess der Kamerakalibrierung von ADAS-Kamerasystemen umfasst mehrere Schritte. Dazu zählen die Kamerakalibrierung am Bandende der Kameraproduktion, am Bandende der Fahrzeugproduktion, sowie eine Auto-Kalibrierung der Kamera während der Fahrt. Die Kalibrierung in der Produktion (egal ob es sich um die Kamera- oder Fahrzeugproduktion handelt) dient als Startlösung bzw. als Basis für die weiteren zwei Schritte und ist somit eine Grundlage für robuste Umgebungserfassung im Fahrzeug.

Es ist grundsätzlich denkbar, eine Kamera am Bandende der Kameraproduktion zusammen mit einer Windschutzscheibe zu kalibrieren. Aufgrund der Vielfalt unterschiedlicher Windschutzscheibentypen und aufgrund der individuellen Einbaulage einer jeden Kamera hinter einer jeden Windschutzscheibe sind auch die entsprechenden Projektionsvorschriften individuell. Damit ist die Kalibrierung in der Kameraproduktion aus praktischer Sicht nicht möglich bzw. nicht sinnvoll.

Es ist auch grundsätzlich denkbar, eine Kamera am Ende der Fahrzeugproduktion zusammen mit der speziellen Windschutzscheibe zu kalibrieren. Letztere Vorgehensweise stellt auch den am häufigsten eingesetzten Stand der Technik dar. Wählt man diese Option, so ist es naheliegend, dass bei einem Scheibenwechsel das optische System neu kalibriert werden muss. Aufgrund der Anforderungen an die Genauigkeit der Kamerakalibrierung, ist die Kalibrierung auf oben beschriebene Weise sehr aufwändig und somit teuer. Es werden hierzu hochgenau hergestellte Targets verwendet. Weiterhin wird das Fahrzeug zur Kalibrierung hochgenau mit einer aufwändigen und teuren Spezialvorrichtung justiert. Typischerweise können auf die oben beschriebene Art und Weise lediglich die extrinsischen Parameter nachjustiert werden.

Der Einfluss der Windschutzscheibe auf die optischen Pfade des Lichtes durch die Kamera bleibt meistens unberücksichtigt. Auch wenn die Kalibrierung nach dem Stand der Technik einen Teil des Problems löst, deckt die oben beschriebene Kalibrierung nicht den Anwendungsfall ab, dass das optische System bestehend aus der ADAS-Kamera und der Windschutzscheibe sich während der Fahrt verändert. Damit besteht immer die Gefahr, dass das ADAS System mit falsch geschätzten Parametern und somit mit einer eingeschränkten Funktionalität vom Endkunden bzw. dem Fahrer des Fahrzeugs mit dem Fahrerassistenzsystems verwendet wird.

Aus DE102016222548A1 ist ein Verfahren zur Bestimmung der Verzeichnungseigenschaften eines optischen Mediums bekannt geworden. Um die Verzeichnungseigenschaft des optischen Mediums zu ermitteln, wird zumindest ein Parameter eines Verzeichnungsmodells zum Kompensieren einer optischen Verzeichnung des optischen Mediums unter Verwendung einer Bildfolge des durch das optische Medium erfassenden Sensors bestimmt. Dabei wird ausgenutzt, dass die Verzeichnungseigenschaft über die Zeit konstant bleibt. Deshalb kann aus der Verschiebung der Abbildung eines Szenenpunkts in zu unterschiedlichen Zeitpunkten aufgenommenen Bildern auf die Verzeichnungseigenschaft rückgeschlossen werden.

Es ist Aufgabe der Erfindung, Lösungen hinsichtlich einer Vereinfachung und Verbesserung des Prozesses der Kamerakalibrierung bereitzustellen.

Die Aufgabe wird durch Gegenstände mit den Merkmalen der unabhängigen Patentansprüche gelöst. Bevorzugte Ausführungsformen sind Gegenstand der Unteransprüche.

Ein Aspekt der Lösung wird dadurch erreicht, dass die Kalibrierung des gesamten optischen Systems aus der Scheibe und der Kamera nicht am Bandende der Fahrzeugproduktion, sondern dynamisch im Fahrzeug während der Fahrt stattfindet und kontinuierlich nachgebessert wird. Die dynamische Autokalibrierung kann auch als Online-Kalibrierung bezeichnet werden.

Ein Aspekt liegt darin, dass der Prozess zur Kalibrierung eines ADAS Kamerasystems beim Einsatz hinter einer Windschutzscheibe oder einem Schutzglas während der Herstellung der Kamera stark vereinfacht werden kann.

Ein Aspekt der Erfindung betrifft eine Vorrichtung und ein Verfahren zur Schätzung des Parametersatzes eines ADAS Kamerasystems während der Fahrzeugfahrt. Ein Vorteil der Erfindung besteht darin, dass zur Kalibrierung keine hochgenau hergestellten Targets notwendig sind.

Das Verfahren nutzt den vor dem Fahrzeug liegenden starren Anteil der (unbekannten) Verkehrsszenerie zur Kalibrierung des Effektes der Windschutzscheibe. Um dies zu bewerkstelligen, benötigt man ein spezielles optisches Modell einer Kombination einer Windschutzscheibe und einer Kamera.

Es ist aus Erfahrungen in der Literatur bekannt, dass eine Schätzung der Parameter eines solchen Modells nicht immer möglich ist. Es ist auch aus dem Stand der Technik bekannt, dass die Kalibrierung bestimmter Parameter während bestimmter vorteilhafter Fahrten und Kamerakonfigurationen durchgeführt werden kann. Vorteilhaft sind hierbei z.B. nicht verschwindende (z.B. radiale) Verzeichnungen. Eine Einschätzung, welche Parameter während welcher Fahrtrajektorie schätzbar sind, kann in einer Ausprägung der Erfindung während der Fahrt aufgrund von vergangenen Erfahrungen gelernt werden. Durch diese beiden Eigenschaften kann eine zu industriellen Standards vergleichbare Qualität der Kalibrierung nach einigen wenigen Messungen erreicht werden.

Ein Aspekt der Erfindung betrifft eine Vorrichtung (z.B. ein Steuergerät) zur Berechnung der Kalibrierung eines Kamerasystems, das in einem Fahrzeug eingebaut ist.

Ein Aspekt der Erfindung betrifft eine Schätzung der Fahrtbewegung bzw. Fahrtgeometrie des Fahrzeugs während einer Kurvenfahrt (also eine Schätzung der Kurvenbewegung) und deren Berücksichtigung bei der Schätzung der Parameter des Kamerasystems.

Ein weiterer Aspekt betrifft die Berücksichtigung mindestens eines Parameters, der die Scheibe charakterisiert.

Ein Aspekt der Lösung betrifft die Erkenntnis bzw. Annahme, dass während spezieller Kurvenfahrten eine Autokalibrierung eines optischen Gesamtmodells aus der Windschutzscheibe und einer Kamera mithilfe des Bundle-Adjustment Verfahrens möglich ist. Das Verfahren kann dazu ausgebildet sein, den Zusammenhang zwischen dem Kurventyp und den ermittelbaren Parametern zu lernen. Letzteres stellt einen wesentlichen innovativen Schritt im Vergleich zu gegebenem Stand der Technik dar.

Ein Aspekt der Erfindung betrifft den Aufbau einer Bibliothek bzw. einer Art Erfahrungsdatenbank, in der Informationen gespeichert werden bei welchem Fahrt- bzw. Kurventyp welche Parameter updatebar bzw. nachkalibrierbar sind. Die Verwendung der Bibliothek ermöglicht, dass gegenüber dem Verfahren der DE 102018204451 A1 mehr Kurvenfahrten zur Kalibrierung verwendet werden können und man eine Vorgehensweise hat, wie man konkret herausfindet, welche Parameter wann nachkalibriert werden können.

Die Vorrichtung und das Verfahren sind so ausgelegt, dass die notwendigen Daten zur Initialisierung des Bundle-Adjustment Algorithmus mit einer guten Startlösung bereitgestellt werden können. Die Ergebnisse vieler Kurvenfahrten können durch Filterung zu einer erheblichen Verbesserung der Genauigkeit führen, die mit der Genauigkeit der Fertigungskalibrierung konkurrieren kann.

Die Lösung bietet den Vorteil einer erheblichen Vereinfachung von Testsystemen in der Fertigung von ADAS-Systemen beim Fahrzeughersteller sowie von Test- bzw. Kalibriersystemen bei Reparaturwerkstätten beim Austausch von Kamerasystemen bzw. Fahrzeugscheiben. Damit wird der Prozess der Herstellung und Wartung von ADAS-Systemen enorm vereinfacht und günstiger gemacht.

Im Folgenden werden zunächst Aspekte der Lösung in den aus der Literatur bekannten Kontext eingeordnet.

Literaturauswahl:

[1] Hartley, Zissermann, Multiple View Geometry in Computer Vision, 2000, Cambridge University Press, ISBN: 0521623049 (erste Auflage).

[2] Peter Sturm: Critical motion sequences for monocular self-calibration and uncalibrated euclidean reconstruction, CVPR, 1997, p. 1100-1105.

[3] C. Wu: Critical configurations for radial distortion self-calibration. In CVPR, 2014.

Target-lose Kalibrierung von Kameras ist in der Literatur wohlbekannt [1]. Die Verfahren zur Kalibrierung unterteilen sich in Verfahren zur Schätzung einer (mehr oder weniger groben) Startlösung der Parameter und Verfahren zu einer Nachbesserung einer vorhandenen Lösung. Erstere Verfahren sind algebraischer Natur. Aufgrund der aufwändigen Algorithmen und schlechter Robustheit eignen sie sich nur in Spezialfällen für praktische Lösungen. Weiterhin sind solche Verfahren für ADAS-Zwecke von geringer Relevanz, denn in der ADAS-Welt sind typischerweise sehr gute Startlösungen aus der Fertigung bekannt. Bei praktischen Applikationen beschränkt man sich für automotive Zwecke meistens auf eine Nachbesserung einer kontinuierlich geschätzten Kalibrierung, wobei die zuletzt geschätzten Parameter eine sehr gute Startlösung für die Algorithmen darstellen. Die Klasse der als "Golden Standard" [1] bekannten optimalen Verfahren heißt Bundle-Adjustment (In [1] wird im Abschnitt 10.4.1 der Begriff "Gold Standard" erwähnt im Zusammenhang mit Bundle-Adjustment im Algorithmus 10.3.).

Die vorhandene Literatur deckt nicht zufriedenstellend den Fall ab, dass in das optische System eine Windschutzscheibe eingebunden ist. Als ein relevanter Stand der Technik gilt das Patent EP 3293701 B1. Es zeigt ein Verfahren zur Kalibrierung eines kamerabasierten Systems eines Fahrzeugs mit einer Windschutzscheibe. Ein Abbildungsziel in Form einer Platte mit einem bekannten Muster wird derart im Sichtfeld einer Kamera des kamerabasierten Systems platziert, dass die Kamera ein Kalibrierungsbild der Platte durch die Windschutzscheibe aufnehmen kann. Mit der Kamera wird genau ein Kalibrierungsbild der Platte aufgenommen. Das Kalibrierungsbild wird mit dem bekannten Muster verglichen. Eine Windschutzscheibenverzerrung, die durch die Windschutzscheibe eingeleitet wird, wird unter Verwendung eines Kameramodells, das Parameter umfasst, die Verzerrungseigenschaften der Windschutzscheibe repräsentieren, berechnet. Die intrinsischen Parameter der Kamera werden als bekannt vorausgesetzt.

Die Windschutzscheibenverzerrung wird im kamerabasierten System gespeichert.

Bereits zuvor ist erkannt worden, dass für eine praktische Implementierung sich eine Reihe von nichttrivialen Fragestellungen ergibt, die in der Literatur bis dato nicht klar beantwortet wurden. Das Problem mit dem Stand der Technik besteht in den sogenannten "kritischen Konfigurationen" für die Kalibrierung. Diese kann man als eine ungünstige Zusammenkunft aus einem optischen Modell, einer Szenengeometrie, sowie einer Fahrzeugbewegung ansehen, bei der das Bundle-Adjustment Problem keine eindeutige Lösung hat oder die wahre Lösung nahe einer mehrdeutigen Lösung liegt. In all diesen Fällen kann es zu einer Fehlschätzung der intrinsischen Parameter kommen, die prinzipiell beliebig weit weg von den wahren Parametern liegt.

Peter Sturm beschreibt in [2] eine vollständige Taxonomie von kritischen Konfigurationen für die Autokalibrierung einer Lochkamera. Aus diesem Basiswerk ist ersichtlich, dass sämtliche Bewegungen in einer Ebene (z.B. entlang einer Kurvenfahrt) unabhängig von der Szene für eine Lochkamera kritisch sind. Ein Fahrzeug mit einem ADAS System führt aber in der Praxis in kurzen Zeitabschnitten (einige wenige Sekunden) im Wesentlichen ebene Bewegungen durch. Zusammengefasst, wenn man das reine Lochkameramodell für die Modellierung der Kamera verwendet, ist eine intrinsische Autokalibrierung in einem Fahrzeug in kurzer Zeit so gut wie immer schwierig, wenn nicht unmöglich.

Nach Peter Sturm (90-er Jahre), hat sich die Literatur nur wenig mit der Problematik der Eindeutigkeit der Autokalibrierung für komplexere Kameramodelle beschäftigt. Lediglich in C. Wu [3] gibt es eine Abhandlung über kritische Konfigurationen für radiale Verzeichnungen und eine entzeichnende Funktion. Die Misserfolge liegen zum Teil daran, dass keine Formalismen zur Untersuchung von kritischen Konfigurationen vorhanden sind.

Es ist aus der Literatur aber bekannt, dass eine Beurteilung des Ergebnisses einer Bundle-Adjustment Prozedur anhand von höheren Ableitungen der Fehlerfunktion möglich ist. Diese Eigenschaft kann vorteilhaft in einer Ausführung der vorliegenden Erfindung ausgenützt werden.

Für Windschutzscheibenmodelle existieren derzeit in der Literatur keine Untersuchungen kritischer Konfigurationen, weil praktisch etablierte mathematische Modelle für solche optischen Systeme bis heute nicht existieren. Die oben genannten Methoden wurden bis heute nicht auf die neu entstandenen optischen Modelle angewandt. In den folgenden Abschnitten werden praktikable Vorgehensweisen zur praktischen Umsetzung der Autokalibrierung angegeben und näher erläutert.

Ein erfindungsgemäßes Verfahren zur Autokalibrierung einer Fahrzeugkamera, die während einer Fahrt des Fahrzeugs einen Bereich der Umgebung des Fahrzeugs durch eine (transparente) Scheibe hindurch abbildet, umfasst die Schritte:

a) Bereitstellen eines Projektionsmodells der Fahrzeugkamera, wobei das Projektionsmodell als Parameter mehrere extrinsische Parameter, einen oder mehrere intrinsische Parameter der Fahrzeugkamera und mindestens einen die Scheibe charakterisierende Parameter umfasst,
b) Erfassen einer Folge von Bildern der Fahrzeugkamera während einer Kurvenfahrt des Fahrzeugs.
c) Bestimmen eines Kurventyps anhand der aktuellen Bewegung des Fahrzeugs während der Kurvenfahrt, zum Beispiel mittels eines Kurvenschätzers.
d) Schätzen der [nachzukalibrierenden] Parameter unter Berücksichtigung von-Bildpunkten oder Bildmerkmalen bzw. Korrespondenzen in der Bilderfolge, die stationären Objekten in der Umgebung des Fahrzeugs entsprechen,

- der aktuellen Bewegung des Fahrzeugs und
- des bestimmten Kurventyps.

Das Schätzen der Parameter erfolgt durch ein Minimieren einer Fehlerfunktion (bzw. Verlustfunktion, "loss function"), die die Abweichung von aus der Bilderfolge ermittelten Bildpunkten/-merkmalen, die stationären Objekten in der Fahrzeugumgebung entsprechen, von mittels des Projektionsmodells projizierten Bildpunkten der stationären Objekte angibt. e) Ausgeben mindestens eines der geschätzten Parameter.

Eine Fahrzeugkamera kann auch ein Fahrzeugkamerasystem bezeichnen. Im einfachsten Fall entspricht die Fahrzeugkamera einer monokularen Kamera. Sofern das Fahrzeugkamerasystem mehrere monokulare Kameras umfasst, können diese als einzelne Kameras kalibriert werden. Optional ist es dann jedoch möglich, Gemeinsamkeiten bei der Kalibrierung zu berücksichtigen, die mehrere Kameras betreffen. Sofern alle Kameras eines Fahrzeugsystems ortsfest im Fahrzeug verbaut sind, ist beispielsweise die Fahrzeugbewegung für alle Kameras gleich.

Die Scheibe kann eine (Glas-)Scheibe im Strahlengang der Kamera sein, beispielsweise eine Fahrzeugscheibe, wie z.B. eine Windschutzscheibe, Heckscheibe oder Seitenscheibe des Fahrzeugs, durch die die Kamera die Umgebung des Fahrzeugs erfasst.

Die Parameter hängen ab vom Projektionsmodell der Kamera. Mit dem "Bereitstellen des Projektionsmodells" entscheidet man sich praktisch für das mathematische Modell, mit dem man die Welt modelliert. Dabei kommen extrinsische, ein oder mehrere intrinsische Parameter der Kamera und mind. ein die Scheibe charakterisierender Parameter vor.

Extrinsische Parameter definieren die Position und Orientierung der Kamera in der Welt. Sie geben also Auskunft über die Beziehung zwischen Welt- und Kamerakoordinaten. Bei einer Bewegung der Kamera ändern sich die Kameraposen durch Translation und Rotation. Bei im Fahrzeug fest verbauten Kameras ist die Kamerabewegung durch die Fahrzeugbewegung vorgegeben. Für die Initialisierung der extrinsischen Parameter beim Bundle-Adjustment zur Schätzung aller Parameter können die geschätzte Kurveninformation, bzw. die dafür verwendeten Odometriedaten genutzt werden. Am Ende vom Bundle Adjustment interessiert man sich häufig nur für die intrinsischen und Scheiben-Parameter verwirft die übrigen.

Intrinsische Parameter erlauben das Abbilden von Kamerakoordinaten auf Bildpixelpositionen. Beispiele intrinsischer Parameter sind die Brennweite, der Hauptpunkt (bzw. das Zentrum des Bildes), die Größe eines Pixels in horizontaler und vertikaler Richtung und Verzerrungsfaktoren, die Auskunft über (z. B. radiale) Verzerrungen geben.

Mindestens ein die Scheibe charakterisierender Parameter kann beispielsweise die Dicke der Scheibe sein. Zusätzlich kann die Orientierung der Scheibe ein charakterisierender Parameter sein. Die Orientierung der Scheibe kann durch den Normalenvektor der Scheibe angegeben werden. Die Orientierung der Scheibe zur Blickrichtung bzw. optischen Achse der Kamera definiert den Eintrittswinkel des Strahlengangs. Ein weiterer Scheibenparameter kann die Brechzahl des Scheibenmaterials sein.

Die Fehlerfunktion kann als Variablen die Raumpunkte (stationärer Objekte), extrinsische Kameraparameter bzw. Kameraposen, intrinsische Kameraparameter und Scheibenparameter aufweisen. Die Koordinaten der Raumpunkte werden hilfsweise mitgeschätzt.

In einer Ausführungsform wird nach dem Schritt des Schätzens der Parameter überprüft, ob die Kalibrierung gelungen ist, anhand eines Schwellwerts für die minimierte Fehlerfunktion.

Gemäß einer Ausführungsweise erfolgt bei einer gelungenen Kalibrierung eine Mehrdeutigkeitsanalyse bzw.

eine Validierung dahingehend, welche(r) Parameter genau genug geschätzt wurde(n) und diese(r) Parameter werden bzw. wird ausgegeben. Es können auch alle Parameter ausgegeben werden und die Information, welche(r) Parameter genau genug geschätzt werden konnte(n). In einer Ausführungsvariante sollte ein Update aller variablen Parameter überhaupt nur dann in Erwägung gezogen werden, wenn die Kovarianzanalyse keine Mehrdeutigkeiten andeutet. Bei einer Schätzung mit zum Teil mehrdeutigen Parametern besteht die Gefahr, dass andere Parameter auch ungenau bestimmt wurden. Und wenn das der Fall war (also keine Mehrdeutigkeiten angedeutet), sollten nur solche Parameter upgedatet werden, welche gemäß nochmaliger Kovarianzanalyse "gut genug", geschätzt wurden.

In einer Ausführungsform wird zusätzlich zu den geschätzten Parametern eine Information an eine Bibliothek ausgegeben. Die Bibliothek umfasst eine Zuordnung von durchfahrenen Kurventypen zu dabei jeweils (nach bisherigem Wissen gut bzw. eindeutig) schätzbaren Parametern. Die Bibliothek kann in den Schätzer der Fahrtgeometrie integriert sein. Die ausgegebene Information gibt an, ob für einen oder mehrere ("nachzukalibrierende(n)") Parameter für den aktuell durchfahrenen Kurvenfahrttyp eine Schätzung erfolgreich (und eindeutig) ist, und (falls ja) für welche(n) Parameter dies der Fall ist. Gemeint ist mit anderen Worten, dass die Kurvenfahrt, auf deren Grundlage die aktuelle (und erfolgreiche) Schätzung erfolgt ist, einem Kurventyp zugeordnet wird und das Wissen, dass für diesen Kurventyp bestimmte Parameter (als Ergebnis der Mehrdeutigkeitsanalyse) gut geschätzt werden können.

Gemäß einem Ausführungsbeispiel erfolgt eine Bewertung der Schätzbarkeit von nachzukalibrierenden Parametern für den aktuellen Kurventyp, insbesondere durch Nachsehen in der Bibiliothek. Es werden also ein oder mehrere nachzukalibrierende Parameter ermittelt, für die bei dem bestimmten Kurventyp eine Schätzbarkeit erwartet wird. Diese Parameter können als freie Parameter bezeichnet werden. Der oder die übrigen Parameter werden fixiert.

Die tatsächliche Schätzung des oder der nachzukalibrierenden Parameter wird nur bei gegebener Schätzbarkeit vorgenommen. Andernfalls wird das Verfahren (im nächsten Zeitschritt) erneut durchgeführt.

In einer Ausführungsform umfasst die Mehrdeutigkeitsanalyse eine Kovarianzauswertung.

Gemäß einer Ausführungsweise erfolgt eine Initialisierung der intrinsischen und/oder Scheiben-Parameter durch die Übernahme der intrinsischen und/oder Scheiben-Parameter aus einer Werkskalibrierung der Fahrzeugkamera.

Gemäß einem Ausführungsbeispiel wird aus der aktuellen Bewegung des Fahrzeugs (z.B. definiert durch Bewegungsdaten aus einer Odometrie) während der Kurvenfahrt eine Startlösung für die extrinsischen Parameter bestimmt wird. Auf diese Weise kann die Geometrie der Fahrtbewegung in die Schätzung der Parameter eingehen.

In einer Ausführungsform erfolgt eine Ermittlung von Bildpunkten/-merkmalen, die stationären Objekts in der Fahrzeugumgebung entsprechen, aus der Bilderfolge mittels eines Optischen-Fluss-Schätzers und/oder eines Fluss-Trackers.

Gemäß einem Ausführungsbeispiel ist die Scheibe die Windschutzscheibe des Fahrzeugs.

Ein weiterer Gegenstand der Erfindung betrifft eine Vorrichtung zur Autokalibrierung einer Fahrzeugkamera während einer Fahrt des Fahrzeugs. Die Vorrichtung umfasst die Fahrzeugkamera, eine Recheneinheit, einen Kurvenschätzer bzw. eine Kurven-Schätzeinheit und eine Ausgabeeinheit.

Die Fahrzeugkamera ist dazu ausgebildet, einen Bereich der Umgebung des Fahrzeugs durch eine Scheibe (des Fahrzeugs) hindurch abzubilden.

Die Recheneinheit ist dazu ausgebildet, ein Projektionsmodells der Fahrzeugkamera bereitzustellen, wobei das Projektionsmodell als Parameter mehrere extrinsische Parameter, mindestens einen intrinsischen Parameter der Fahrzeugkamera und mindestens einen die Scheibe charakterisierenden Parameter umfasst.

Die Fahrzeugkamera ist dazu ausgebildet, eine Folge von Bildern während einer Kurvenfahrt des Fahrzeugs zu erfassen.

Die Recheneinheit ist dazu ausgebildet, Parameter zu schätzen unter Berücksichtigung von:

- Bildpunkten in der Bilderfolge von stationären Objekten in der Umgebung des Fahrzeugs,
- der aktuellen Bewegung des Fahrzeugs, und
- des (aktuell) bestimmten Kurventyps.

Die Parameter werden geschätzt durch Minimieren einer Fehlerfunktion, die die Abweichung von aus der Bilderfolge ermittelten Bildpunkten, die stationären Objekten in der Fahrzeugumgebung entsprechen, von mittels des Projektionsmodells projizierten Bildpunkten der stationären Objekte angibt.

Die Ausgabeeinheit ist dazu ausgebildet, die geschätzten Parameter auszugeben.

Die Vorrichtung und/oder die Recheneinheit kann insbesondere einen Mikrocontroller oder -prozessor, eine Zentrale Verarbeitungseinheit (CPU), ein Grafische Verarbeitungseinheit (GPU), einen Digital Signal Processor (DSP), einen ASIC (Application Specific Integrated Circuit), einen FPGA (Field Programmable Gate Array) und dergleichen mehr sowie Software zur Durchführung der entsprechenden Verfahrensschritte umfassen.

Ein weiterer Gegenstand der Erfindung betrifft ein Fahrzeug mit einer Fahrzeugkamera und einer entsprechenden Autokalibrierungs-Vorrichtung.

Ein weiterer Gegenstand der Erfindung betrifft ein Computer Programmelement, welches, wenn damit eine Datenverarbeitungseinheit bzw. ein Steuergerät programmiert wird, die Datenverarbeitungseinheit dazu anweist, ein erfindungsgemäßes Verfahren durchzuführen.

Ein weiterer Gegenstand der Erfindung betrifft ein Computerlesbares Speichermedium, auf dem ein erfindungsgemäßes Computer Programmelement gespeichert ist.

Die vorliegende Erfindung kann somit in digitalen elektronischen Schaltkreisen, Computer-Hardware, Firmware oder Software implementiert sein.

Im Folgenden werden Ausführungsbeispiele beschrieben und bestimmte Aspekte anhand von Figuren näher erläutert.

Dabei zeigen

Fig. 1 eine schematische Darstellung einer Vorrichtung, z.B. eines Steuergeräts, und eines Ablaufs einer Autokalibrierung in dem Steuergerät,
Fig. 2 schematisch die Geometrie eines Fahrverlaufs des Fahrzeug mit einer Kurvenfahrt
Fig. 3 eine im Inneren eines Fahrzeugs hinter der Windschutzscheibe angebrachte ADAS-Kamera,
Fig. 4 schematisch eine ADAS-Kamera, die eine Szene außerhalb des Fahrzeugs durch die Windschutzscheibe abbildet,
Fig. 5 einen schematischen Überblick eines Anfangs eines Verfahrens zur Autokalibrierung,
Fig. 6 einen iterativen Ablaus eines Verfahrens zur Kalibrierung durch eine Bestimmung von Parametern, und
Fig. 7 Details zur Schätzung der Parameter.

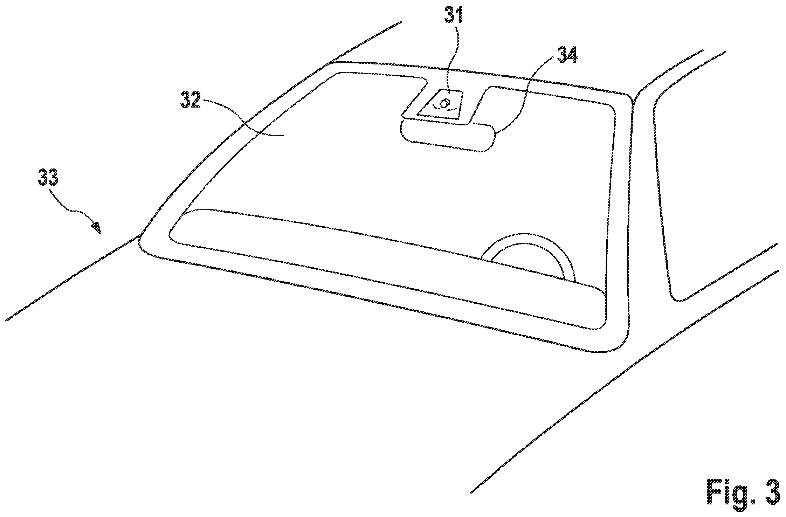

Fig. 3 illustriert die Ausgangssituation:
Im Inneren eines Fahrzeugs 33 ist hinter der Windschutzscheibe 32 etwa im Bereich (oberhalb) des Innenrückspiegels 34 eine Fahrzeugkamera 31 eines Fahrerassistenzsystems angebracht. Die Fahrzeugkamera 31 blickt grob nach vorne, d.h. sie erfasst die Umgebung bzw. das Umfeld vor dem Fahrzeug 33.

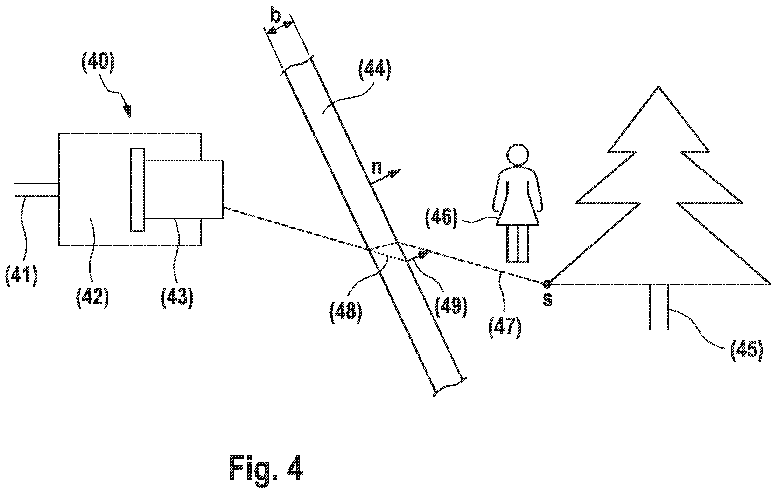

Fig. 4 veranschaulicht sehr schematisch eine Situation während einer Fahrt des Fahrzeugs 33. Eine (Fahrzeug-) Kamera 40 im Fahrzeug 33 umfasst ein Gehäuse 42, eine Kameraoptik 43 und eine elektrische Verbindung 41 zu einer Recheneinheit. Die Windschutzscheibe 44 des Fahrzeugs 33 kann als planparallele transparente Scheibe modelliert werden. Die Kameraoptik 43 ist auf einen Bereich außerhalb des Fahrzeugs 33 fokussiert, insofern kann die Windschutzscheibe 44 als eine nahe planparallele Scheibe betrachtet werden. Durch die Windschutzscheibe 44 hindurch erfasst die Fahrzeugkamera 40 eine Szene der aktuellen Fahrzeugumgebung. Die Kameraoptik 43 bzw. das Kameraobjektiv kann beispielsweise eine Fischaugenlinse oder eine rektilineare Weitwinkellinse umfassen. Die Kameraoptik bewirkt eine Fokussierung einer Szene außerhalb des Fahrzeugs auf den Bildsensor der Kamera 40. Der Bildsensor kann beispielsweise ein CMOS- oder CCD-Sensor sein. Das vom Bildsensor erfasste Rohbild wird von einer Recheneinheit weiterverarbeitet.

Die Szene umfasst starre Bestandteile 45 ("stationäre Objekte") wie beispielsweise den schematisch dargestellten Baum oder ein nicht dargestelltes Gebäude, Verkehrsschilder, Brücken, Gebäude etc. und dynamische Bestandteile 46 wie beispielsweise einen sich bewegenden Fußgänger. Bei einer Bewegung des Fahrzeugs 33 wird die Fahrzeugkamera 40 (wie auch die Windschutzscheibe 44) mitbewegt.

Die Windschutzscheibe 44 vor der Kamera 40 - oder allgemein ein Schutzglas, hinter dem eine andere Kamera angeordnet sein kann, ist dadurch gekennzeichnet, dass das refraktive Medium näherungsweise eine planparallele Platte mit einer Dicke b darstellt. Hierunter fallen beispielsweise sämtliche Schutzgläser von Kameras mit einer flachen Austrittsöffnung sowie Glasscheiben von Fahrzeugen. Der Normalenvektor n gibt die Orientierung senkrecht zur Windschutzscheibenebene im Bereich nahe der Fahrzeugkamera 40 an. Die Windschutzscheibe weist eine Brechzahl bzw. Brechungsindex v auf. In Fig. 4 ist ein Raumpunkt s gezeigt, z.B. ein Randpunkt eines Baums 45 bzw. eines stationären Objekts. Ein optischer Pfad 47 eines Lichtstrahls ist schematisch als gestrichelte Linie dargestellt, der vom Raumpunkt s ausgehend durch die Windschutzscheibe 44 abgelenkt wird und durch die Kameraoptik 43 auf einen Bildsensor der Fahrzeugkamera 40 fokussiert wird.

Der Versatz des optischen Pfads 47 durch die Windschutzscheibe kann durch eine Parallelverschiebung 49 eines ungehindert in die Windschutzscheibe eintretenden virtuellen Lichtstrahls 48 (gepunktete Linie) repräsentiert bzw. angenähert werden. Die Parallelverschiebung 49 ergibt sich als Produkt einer Scheiben- bzw. Plattenverschiebung (Englisch: "slab shift") $\sigma$ mit dem Normalenvektor n.

Die Scheibenverschiebung $\sigma$ kann als eine Konstante angenähert werden, insbesondere als b (v - 1) / v. Diese Näherung ist schnell berechenbar aber hinreichend genau nur für kleine Einfallswinkel.

Alternativ kann die Scheibenverschiebung $\sigma$ berechnet werden als Wurzel $\sigma_0$ der Quartfunktion

$$g\,(\sigma) = a_4\,\sigma^4 + a_3\,\sigma^3 + a_2\,\sigma^2 + a_1\,\sigma + a_0,$$

wobei $0 \leq \sigma_0 \leq b$, $a_4 = v^2$, $a_3 = -2v^2(w + b)$, $a_2 = (v^2 - 1)(u^2 + b^2) + v^2w(w + 4b)$, $a_1 = -2b[v^2(w^2 + u^2) + bw(v^2 - 1) - u^2]$, $a_0 = (v^2 - 1)b^2(w^2 + u^2)$, $w = \mathbf{n \cdot s}$ und $u = \sqrt{(\mathbf{s \cdot s} - w^2)}$. Diese Berechnung führt zu einem hochakkuraten Ergebnis, ist jedoch sehr rechenaufwendig.

Als eine weitere Alternative kann die Scheibenverschiebung $\sigma$ als Fixpunkt der Fixpunktgleichung $\sigma = \varphi(\sigma)$ berechnet werden, wobei $\varphi(\sigma) = b(1 - 1/\sqrt{[(v^2 - 1)(u^2/\{w - \sigma\}^2 + 1) + 1]})$ und $w$ und $u$ wie oben angegeben definiert sind. Ein oder zwei Iterationen von dieser (konvergierenden) Fixpunktgleichung ergeben sehr akkurate Ergebnisse und sind schnell berechenbar.

Sobald die Parallelverschiebung 49 bekannt ist, kann der optische Pfad 47 zurückverfolgt werden und der Raumpunkt s kann berechnet (bzw. rekonstruiert werden), beispielsweise durch ein Bundle Adjustment Verfahren oder ein stereoskopisches Verfahren.

Im Folgenden wird näher beschrieben, wie die Fahrzeugkamera 40 während der Fahrt des Fahrzeugs 33 kalibriert werden kann.

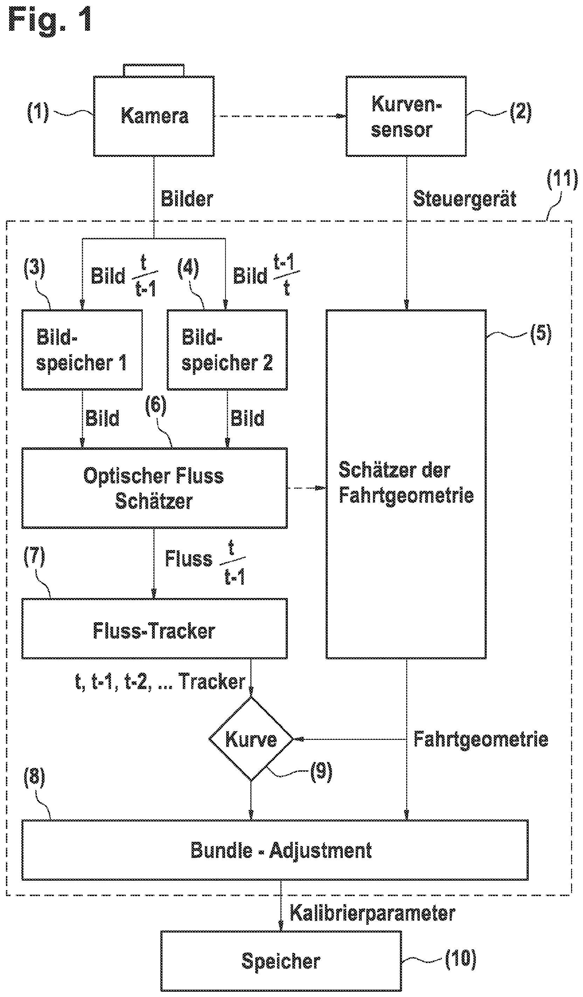

Anhand von Fig. 1 wird das Zusammenspiel und eine schematische Darstellung einer Autokalibrierungs-Vorrichtung beschrieben.

Die Fahrzeugkamera 1 ist in einem bewegten Fahrzeug 33 hinter einer Windschutzscheibe 32 oder einem Schutzglas verbaut, sodass die Fahrzeugkamera nach vorne (in Fahrtrichtung) ausgerichtet ist. Die Fahrzeugkamera 1 liefert in zeitgleichen Abständen Bilder an ein Steuergerät 11. In einer Ausprägung der Erfindung kann die Fahrzeugkamera 1 in das Steuergerät 11 integriert bzw. können die Fahrzeugkamera und das Steuergerät in ein Gehäuse integriert sein, was einer "Smart-Camera" entsprechen würde.

In einer Ausprägung der Erfindung ist ein Kurvensensor 2 im Fahrzeug 33 verbaut, so dass dieser Informationen über die aktuelle Geschwindigkeit sowie die Gierrate des Fahrzeugs 33 an das Steuergerät 11 sendet. In einer Ausprägung der Erfindung kann der Kurvensensor 2 im Steuergerät 11 integriert sein. In einer weiteren Ausprägung der Erfindung kann der Kurvensensor 2 Bilddaten (sowie Daten weiterer Berechnungsschritte) zur Feststellung der Gierrate benutzen.

Im Steuergerät 11 befindet sich Speicher für zwei aufeinanderfolgende Bilder 3 und 4 zu den Zeitpunkten t bzw. t-1 (oder abwechselnd, was hier nicht weiter betrachtet werden soll). Die beiden Bilder werden zum Zeitpunkt t einem Schätzer des optischen Flusses 6 vorgelegt. Hieraus entsteht der sogenannte Temporalfluss von t-1 nach t. Dieser beschreibt die Bewegung der Bildpunkte von Objekten (infinitesimal kleiner Raumpunkte) in der Szene von der Zeit t-1 nach t. Der optische Fluss wird in einem Fluss-Tracker 7 zeitlich verfolgt, dynamische Objekte werden herausgefiltert, und Ausreißer eliminiert. Als Resultat entstehen Tracks von Punkten, die ein und dasselbe stationäre Objekt über mehrere Bilder verfolgen.

Die Informationen des Kurvensensors 2 werden im Steuergerät 11 durch einen Schätzer der Fahrtgeometrie 5 verarbeitet.

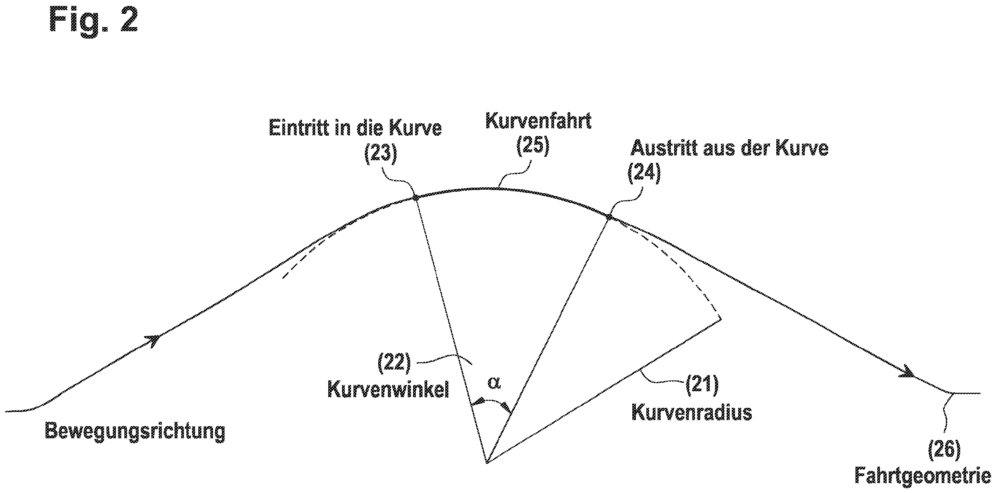

Anhand von Fig. 2 wird auf die Schätzung der Fahrtgeometrie 26 eingegangen. Der Schätzer der Fahrtgeometrie 5 liefert die Schätzung der Fahrtgeometrie 26 in der Ebene. Der Fahrtgeometrie-Schätzer 5 kann auch eine Einschätzung liefern, welche Parameter während bzw. auf Grundlage der aktuellen Kurvenfahrt 25 geschätzt werden können. Die aktuelle Kurvenfahrt kann durch einen Eintrittspunkt in die Kurve 23, einen Kurvenradius 21, einen verstrichenen Kurvenwinkel 22 sowie einen Austrittspunkt aus der Kurve 24 charakterisiert werden. Entspricht die gefahrene Kurve einem speziellen Kurventyp, so werden die Daten aus dem Fahrtabschnitt sowie schätzbare Parameter an den Bundle-Adjustment Algorithmus 8 weitergeleitet.

In einer Realisierung der Erfindung wird die Information des Kurvensensors aus der Essentialgeometrie zwischen einzelnen Frames entnommen.

Ein Bundle-Adjustment Algorithmus 8 nimmt als Startlösung der als schätzbar gekennzeichneten Parameter wahlweise das zuletzt berechnete Ergebnis oder die Schätzung aus der Fertigung oder die nominalen Daten für das gegebene Fahrzeug und verfeinert diese mit den aktuell erhaltenen Fluss-Tracks, welche während der Kurvenfahrt ermittelt wurden.

Das Bundle-Adjustment-Verfahren 8 kann nach Stand der Technik [1] ablaufen mit dem Unterschied, dass als Projektionsmodell nicht ein normales Kameramodell, sondern ein Projektionsmodell mit einer Scheibe verwendet wird. Ein solches Projektionsmodell ist Gegenstand von EP 3293701 B1. Jedoch ist die dort vorgeschlagene Target-basierte Methode zur Kalibrierung einer Fahrzeugkamera hinter bzw. zusammen mit der Windschutzscheibe nicht mit einer dynamischen Autokalibrierung vereinbar. Das spezielle Projektionsmodell basiert auf dem näherungsweisen Lösen einer impliziten Pfadgleichung der Lichtausbreitung (Gleichung 15 aus EP 3293701 B1) nach der unbekannten Projektion im Bild. Die Lösung wird durch eine Reihe von Näherungen durchgeführt, was am Ende zum Lösen einer Gleichung zweiten Grades führt (Gleichung 43 aus EP 3293701 B1). Für das angegebene Modell wird ein Aufbau vorgestellt (vgl. Fig. 3 aus EP 3293701 B1), der zur Ermittlung der Parameter des Modells eingesetzt werden kann.

Das Modell aus EP 3293701 B1 kann dahingehend weiterentwickelt werden, dass für die mathematische Projektion durch die Windschutzscheibe keine Näherungen mehr notwendig sind bzw. die Näherungen lediglich zu sehr kleinen Fehlern führen. Eine Weiterentwicklung des Modells wird im Folgenden beschrieben. Damit ist es möglich das weiterentwickelte Modell zusammen mit Bundle-Adjustment für eine dynamische Kalibrierung der Windschutzscheibe zu verwenden.

Als Windschutzscheibenparameter können ein Normalenvektor n der Windschutzscheibenebene nahe der Fahrzeugkamera, eine Dicke b der Windschutzscheibe und/oder ein Brechungsindex v der Windschutzscheibe verwendet werden. Der Bereich nahe der Fahrzeugkamera ist insbesondere der Bereich der Windschutzscheibe, um den Hauptpunkt (bzw. Sichtbereichsmittelpunkt) der Fahrzeugkamera. Der Normalenvektor n und die Dicke b der Windschutzscheibe können beispielsweise durch Messungen am Bandende der Fahrzeugfertigung durch geometrische (z.B. Target-basierte) Messungen initial bestimmt werden.

Eine durch die Windschutzscheibe bewirkte Parallelverschiebung des optischen Pfads kann dem Produkt einer Scheiben- bzw. Plattenverschiebung (Englisch: "slab shift") $\sigma$ mit dem Normalenvektor n gleichgesetzt werden. Diese Wahl der Berechnung der Parallelverschiebung ist sehr effektiv und kann schnell berechnet werden. Sie kann durch eine direkte Berechnung des optischen Pfades gezeigt werden.

Die Scheibenverschiebung $\sigma$ kann als eine Konstante angenähert werden, was eine extrem schnelle Berechnung ermöglicht, die für kleine Sichtwinkel gute Ergebnisse erzielt. Insbesondere kann die Konstante gleich $b\,(v-1)\,/\,v$ gesetzt werden, was der exakten Lösung für einen optischen Pfad senkrecht zur Windschutzscheibenebene entspricht.

Alternativ kann die Scheibenverschiebung $\sigma$ berechnet werden als Wurzel $\sigma_0$ der Quartfunktion

$$g\,(\sigma) = a_4\,\sigma^4 + a_3\,\sigma^3 + a_2\,\sigma^2 + a_1\,\sigma + a_0,$$

wobei $0 \leq \sigma_0 \leq b$, $a_4 = v^2$, $a_3 = -2_v^2(w+b)$, $a_2 = (v^2-1)(u^2+b^2)+v^2w(w+4b)$, $a_1 = -2b[v^2(w^2+u^2)+bw(v^2-1)-u^2]$, $\sigma_0 = (v^2-1)\,b^2(w^2+u^2)$, $w = \mathbf{n}\cdot\mathbf{s}$ und $u = \sqrt{(\mathbf{s}\cdot\mathbf{s}-w^2)}$. Der Punkt s ist der Punkt im Raum der Szene, der dem Pixel im Bild entspricht. Zu dieser Quartfunktion kann man gelangen, wenn man den optischen Pfad berechnet vom Punkt s zum Ursprung, an dem eine Lochblende einer Lochkamera angenommen wird. Eine Rotation der Koordinaten, bei der der Normalenvektor n in Richtung der $\mathbf{e_3}$ Achse liegt und der Punkt s in der $\mathbf{e_1}$-$\mathbf{e_3}$-Ebene liegt, erleichtert die Berechnung. Die Quartfunktion kann durch Ferrari's Lösung exakt gelöst werden und hat eine eindeutige Lösung für $\sigma_0$ im angegebenen Bereich. Diese Berechnung führt zu einem hochakkuraten Ergebnis, ist jedoch sehr rechenaufwendig.

Als eine weitere Alternative kann die Scheibenverschiebung $\sigma$ als Fixpunkt der Fixpunktgleichung $\sigma = \varphi\,(\sigma)$ berechnet werden, wobei $\varphi\,(\sigma) = b(1 - 1/\sqrt{[(v^2-1)(u^2/\{w-\sigma\}^2+1)+1]})$, mit $w = \mathbf{n}\cdot\mathbf{s}$ und $u = \sqrt{(\mathbf{s}\cdot\mathbf{s}-w^2)}$. Wiederum ist s der Punkt im Raum der Szene, der dem Pixel im Bild entspricht. Zu dieser Fixpunktgleichung kann man gelangen, wenn man den optischen Pfad berechnet vom Punkt s zum Ursprung, an dem eine Lochblende einer Lochkamera angenommen wird. Auch hier erleichtert eine Rotation der Koordinaten, bei der der Normalenvektor n in Richtung der $\mathbf{e_3}$ Achse liegt und der Punkt s in der $\mathbf{e_1}$-$\mathbf{e_3}$-Ebene liegt, die Berechnung. Es kann gezeigt warden, dass die Fixpunktgleichung eine Kontraktion ist mit einer Lipschitz-Konstanten von oben begrenzt durch $c = b\,/\,(w-b)$, was für alle praktischen Anwendungen kleiner als Eins ist. Daher konvergiert die Fixpunktgleichung und eine vorgegebene Genauigkeit kann mit einer endlichen Anzahl an Iterationen der Fixpunktgleichung erzielt werden. Ein oder zwei Iterationen von dieser konvergierenden Fixpunktgleichung ergeben akkurate Ergebnisse und sind schnell berechenbar.

Sei das Projektionsmodell des gesamten optischen Systems gegeben durch die parametrisierbare Abbildung k, sodass ein jeder Bildpunkt $p_{ij}$ zum i-ten Raumpunkt $\mathbf{s_i}$ in der Ansicht j mit den extrinsischen Parametern $\theta_j$ und den intrinsischen Parametern $int$ und die Parameter der Windschutzscheibe $\psi$ die Gleichung

$$p_{ij} = k(\mathbf{s_i}, \theta_j, int, \psi)$$

erfüllt. Es wird hierbei angenommen, dass die unbekannten Parameter der Scheibe $\psi$ und der oder die intrinsischen Parameter $int$ während eines längeren Abschnittes der Fahrt konstant bleiben, sodass lediglich von einer Ansicht zur nächsten Ansicht die $\theta_j$ unterschiedlich sind. Insofern könnten die intrinsischen Parameter $int$ zu den Scheibenparametern $\psi$ hinzugefügt werden zu den fahrtabschnittsweise annähernd konstanten Parametern $\psi$ '.

$p_{ij}$ wird hierbei nicht explizit definiert, sondern es wird angenommen, dass die gemessenen Bildpunkte perfekt durch die Kameraabbildung k beschrieben werden können. Das heißt, wenn man die entsprechenden extrinsischen Parameter $\theta_j$, 3D-Punkte (bzw. Raumpunkte) $\mathbf{s_i}$, intrinschen Parameter $int$ und den oder die Scheiben-Parameter $\psi$ einsetzt, kommt man gemäß Abbildungsgleichung genau beim gemessenen Bildpunkt raus.

Aufgrund von Messfehlern bzw. Rauschen ist das natürlich nie wirklich der Fall und die in der unten angegebenen Summe (der Fehlerfunktion) verwendeten $p_{ij}$'s sind eigentlich als verrauscht zu verstehen, weswegen man durch eine nichtlineare Optimierung auch nicht zur exakten Lösung konvergieren wird, sondern nur zu einer die nahe dran liegt.

Nimmt man nun die aus dem Schätzer der Kurvengeometrie gewonnenen Informationen (5), so stellen diese eine sehr gute Startlösung für $\theta_j$ dar. Der Rest des Verfahrens folgt durch die (lokale) Minimierung des Bundle-Adjustment Problems

$$I(\mathbf{s}_1, \ldots, \mathbf{s}_n, \theta_1, \ldots, \theta_m, int, \psi) = \sum_{ij} \|p_{ij} - k(\mathbf{s}_i, \theta_j, int, \psi)\|^2$$

nach allen Unbekannten, also nach den Raumpunkten $\mathbf{s}_1$ bis $\mathbf{s}_n$, den Kameraposen $\theta_1$ bis $\theta_m$ sowie den Parametern der Scheibe $\psi$ und gegebenenfalls den intrinsischen Parametern *int*. Dabei bezeichnet der Subskript n, dass es n 3D-Punkte $\mathbf{s}_i$ gibt und m, dass es m Ansichten $\theta_j$, und somit m extrinsische Parameter gibt. Die Minimierung erfolgt mit Standardverfahren der nicht-linearen Optimierung. In einer Realisierung kann z.B. das Levenberg-Marquardt Verfahren eingesetzt werden.

Man kann das Bundle-Adjustment Minimierungsproblem auch anders formulieren. Zunächst schreiben wir alle Bildpunkte $p_{ij}$ in einem Vektor $\mathbf{Y}$ untereinander. In der gleichen Anordnung schreiben wir alle entsprechenden Abbildungen $k(\mathbf{s}_i, \theta_j, int, \psi)$ untereinander und fassen alle unbekannten Parameter im Parametervektor $\mathbf{P}$ zusammenfassen. Auf diese Weise definieren wir die vektorwertige Funktion f($\mathbf{P}$). Ohne Messrauschen wäre nun die Idee, den Parametervektor $\mathbf{P}$ zu bestimmen, für den gilt:

$$f(\mathbf{P}) = \mathbf{Y}.$$

Da die Bildpunkte jedoch ein Messrauschen beinhalten arbeiten wir mit folgendem stochastischen Model: $\mathbf{Y}$ ist eine Zufallsvariable mit dem Erwartungswert f($\mathbf{P}$) und der Kovarianzmatrix $\Sigma$ (wird gemäß Empirik vorgegeben).

Damit können wir das Bundle-Adjustment Minimierungsproblem auch als folgenden Schätzer schreiben:

$$\mathbf{P}_{est} = \operatorname{argmin\_P} \quad \tfrac{1}{2}*\|f(\mathbf{P}) - \mathbf{Y}\|\_\Sigma^2.$$

Um eine Näherung für die Kovarianzmatrix dieses Parametervektorschätzers zu erhalten verwenden wir die lineare Näherung f($\mathbf{P}$) = f($\mathbf{P}_0$) + f'($\mathbf{P}_0$)*($\mathbf{P}$ - $\mathbf{P}_0$), wobei $\mathbf{P}_0$ den Punkt bezeichnet, um den wir f linear entwickeln, und erhalten

$$\mathbf{P}_{est}\_approx = \operatorname{argmin\_P} \quad \tfrac{1}{2}*\| f(\mathbf{P}_0) + f'(\mathbf{P}_0)*(\mathbf{P} - \mathbf{P}_0) - \mathbf{Y}\|\_\Sigma^2$$
$$= \mathbf{P}_0 + [ f'(\mathbf{P}_0)^T \Sigma^{-1} f'(\mathbf{P}_0) ]^{-1} f'(\mathbf{P}_0)^T \Sigma^{-1}(\mathbf{Y} - f(\mathbf{P}_0) ),$$

wobei wir an dieser Stelle die Invertierbarkeit annehmen.

Mit der Formel für die Propagation der Kovarianzmatrix ergibt sich so:

$$\operatorname{COV}(\mathbf{P}_{est}\_approx) = ( f'(\mathbf{P}_0)^T \Sigma^{-1} f'(\mathbf{P}_0) )^{-1}.$$

Im Idealfall würden wir den wahren Parametervektor als den Entwicklungspunkt $\mathbf{P}_0$ wählen. Da wir diesen jedoch nicht zur Verfügung haben, verwenden wir als beste Näherung, die wir zur Hand haben den geschätzten Parametervektor als Entwicklungspunkt und erhalten so $\operatorname{COV}_{approx} = ( f'(\mathbf{P}_{est})^T \Sigma^{-1} f'(\mathbf{P}_{est}) )^{-1}$ als approximative Kovarianzmatrix für die geschätzten Parameter.

Diese gilt es nun nach jeder (erfolgreichen, heißt z.B. RMSE check war erfolgreich) Schätzung zu im Hinblick auf Mehrdeutigkeiten/Ungenauigkeiten zu untersuchen.

Das Ergebnis der Berechnung des Bundle-Adjustment Verfahrens 8 sind verfeinerte Fahrzeugposen, eine Rekonstruktion der räumlichen Umgebung der starren Szene, sowie die verfeinerten intrinsischen und Windschutzscheiben-Parameter. Das Verfahren kann über zahlreiche Modifikationen [1] robuster gestaltet werden. Die Ergebnisse der Optimierung können in einer Realisierung der Erfindung durch Mittelung bzw. Filterung verfeinert werden. Hierdurch kann aufgrund der Eigenschaften des Verfahrens nach wenigen Filterschritten eine Genauigkeit erreicht werden, die mit aktuellem Stand der Technik in der Fertigung gleichwertig ist.

In einer Ausführung der Erfindung werden die intrinsischen Parameter *int* der Kamera 40 mitgeschätzt. Dann ist es vorteilhaft, dass die Kamera für den Erfolg des obigen Bundle-Adjustments 8 gewisse Eigenschaften besitzt. In einer Realisierung der Erfindung, besitzt die Kamera und somit das Kameramodell k oben nicht verschwindende radiale Verzeichnungen [2]. Letzteres ist typisch für heutige Fahrzeugkameras. In einer weiteren Realisierung besitzt die Kamera zusätzlich zur letzten Bemerkung nicht verschwindende tangentiale Verzeichnungen.

Am Ende der Berechnung wird das Ergebnis zusätzlich validiert. Die resultierenden Kameraparameter werden im positiven Fall (die Kalibrierung ist gelungen) gegebenenfalls im Speicher 10 zur Weiterverarbeitung abgelegt. Im negativen Fall kann die Kalibrierung mehrdeutig oder fehlerhaft sein. Die Mehrdeutigkeit kann beispielsweise anhand der Jakobi-Matrix einer vektorwertigen Abbildung/Residualfunktion und anhand der Hesse-Matrix der Fehlerfunktion ausgewertet an der gefundenen Minimalstelle ermittelt werden → $(J^T \Sigma J)^{-1}$ (vgl. oben). Im Prinzip führt man eine Eigenvektoranalyse der inversen Hesse-Matrix der Fehlerfunktion durch. Dies kann auch als approximierte Kovarianzmatrix

$COV_{approx}$ der geschätzten Parameter verstanden werden.

Letztere Informationen geben auch Aufschluss darüber, welche Parameter nicht eindeutig ermittelt werden konnten. In diesem Fall kann die entsprechende Fahrzeugbewegung für die Ermittlung aller oder des entsprechenden Satzes der Parameter als ungünstig markiert werden. Auf diese Weise kann während der Fahrt die Entscheidung welche Parameter für welche Kurventypen geschätzt werden sollen (siehe Entscheidungsschritt 'Kurve' 9 in Fig. 1) vorteilhaft verbessert werden, ohne eine harte Vorabuntersuchung der entsprechenden Bedingungen zu machen. Eine fehlerhafte Kalibrierung erkennt man am hohen Wert der Fehlerfunktion I. Ist die Kalibrierung fehlerhaft, so wird das Ergebnis verworfen.

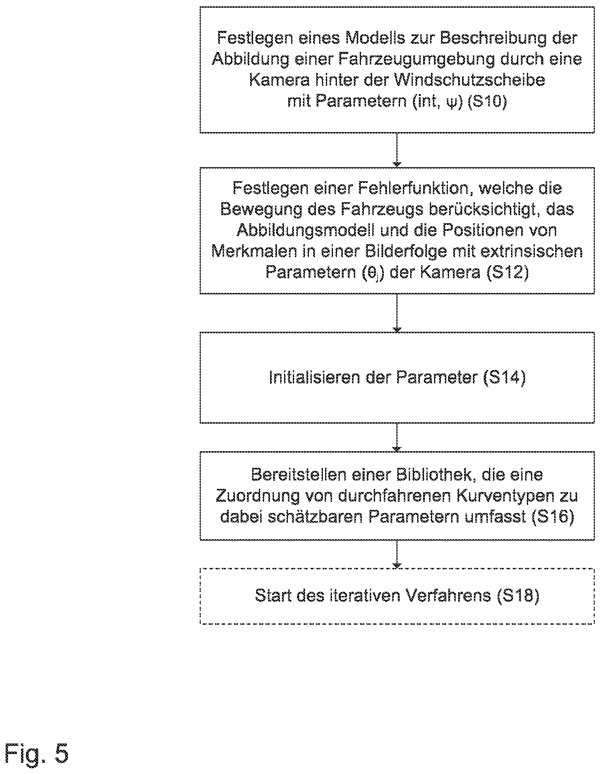

Fig. 5 illustriert beispielhaft einen Anfang eines Verfahrens zur Autokalibrierung.

In einem ersten Schritt S10 wird ein Modell zur Beschreibung der Abbildung einer Fahrzeugumgebung durch eine Kamera im Inneren des Fahrzeugs, hinter der Windschutzscheibe festgelegt bzw. bereitgestellt bzw. vorgegeben. Das Modell weist sowohl intrinsische Kameraparameter *int* als auch mindestens einen Parameter $\psi$ zur Charakterisierung der Windschutzscheibe auf.

In einem weiteren Schritt S12 wird eine Fehlerfunktion festgelegt, die die Bewegung des Fahrzeugs berücksichtigt, das Abbildungsmodell und die Positionen von Merkmalen (Features, z.B. Bildpunkten) in einer Folge von Bildern. Extrinsische Parameter $\theta_j$ der Kamera werden berücksichtigt. Die extrinsischen Parameter $\theta_j$ werden im Wesentlichen durch die Bewegung des Fahrzeugs bestimmt.

In einem weiteren Schritt S14 werden die Parameter initialisiert. Die intrinsischen Parameter *int* und der oder die Windschutzscheibenparameter $\psi$ können aus der Werkskalibrierung übernommen werden.

In einem Schritt S16 wird eine Bibliothek bereitgestellt, die eine Zuordnung von durchfahrenen Kurventypen zu dabei schätzbaren Parametern umfasst. Diese Bibliothek kann durch frühere (Test-)Fahrten erstellt worden sein. Das Verfahren der DE 102018204451 A1 kann dazu verwendet werden, eine sehr rudimentäre Bibliothek zu erstellen. Möglich ist auch, dass die Bibliothek anfangs leer ist. Die Bibliothek dient dazu, dass durch das iterative Durchlaufen des Verfahrens Inhalte gespeichert werden können, nämlich eine Information darüber, welcher Kurventyp zur Bestimmung welcher Parameter geeignet ist.

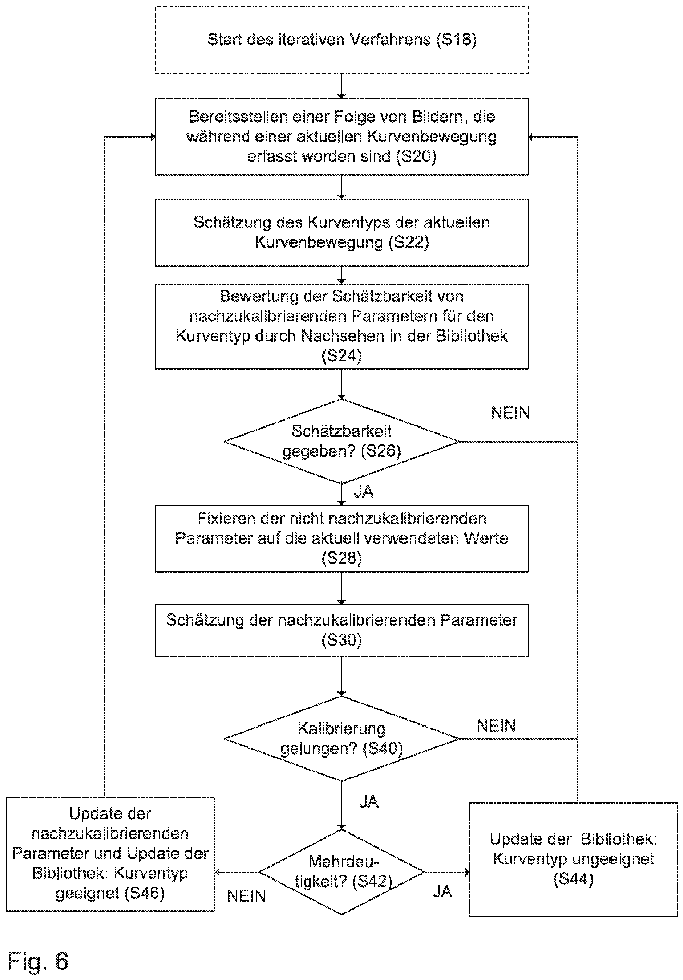

In Schritt S18 wird der iterative Teil des Verfahrens gestartet, welches in Fig. 6 veranschaulicht wird.

Die Darstellung in Fig. 6 beginnt mit dem Start des iterativen Verfahrens S18.

In Schritt S20 wird eine Folge von Bildern der Kamera bereitgestellt, die während einer aktuellen Kurvenbewegung erfasst worden sind.

Im Schritt S22 wir der Kurventyp der aktuellen Kurvenbewegung geschätzt, z.B. durch einen Kurven- oder Fahrtgeometrieschätzer. Sollte geschätzt werden, dass das Fahrzeug aktuell geradeaus fährt, können neue Bilder von der Kamera angefordert bzw. bereitgestellt werden.

Im Schritt S24 wird für den geschätzten Kurventyp durch Nachsehen in der Bibliothek die Schätzbarkeit von nachzukalibrierenden Parametern bewertet. Es wird eine Bewertung der Schätzbarkeit von potentiell nachzukalibrierenden Parametern aufgrund der aktuellen Kurvenbewegung vorgenommen.

Schritt S26 betrifft die Frage bzw. Entscheidung, ob eine Schätzbarkeit für zumindest einen nachzukalibrierenden Parameter gegeben ist.

Sofern der Bibliothek zu entnehmen ist, dass der aktuelle Kurventyp nicht zur Schätzung von Parametern geeignet ist, wird wieder mit Schritt S20 begonnen. Dies kann neben einer Geradeausfahrt auch für andere Kurventypen der Fall sein.

Andernfalls wird nachgesehen, für welche(n) der Parameter die Schätzbarkeit gegeben ist. Ist sie z.B. nur für einen Parameter gegeben (laut Bibliothek), werden die übrigen Parameter ("nicht nachzukalibrierenden Parameter") in Schritt S28 auf die aktuell verwendeten Werte fixiert. Dann ist nur noch der eine nachzukalibrierende Parameter ein freier Parameter und kann im Folgenden aktualisiert werden. Es kann vorkommen, dass alle Parameter nachzukalibrieren sind, dann entfällt das Fixieren von Parametern.

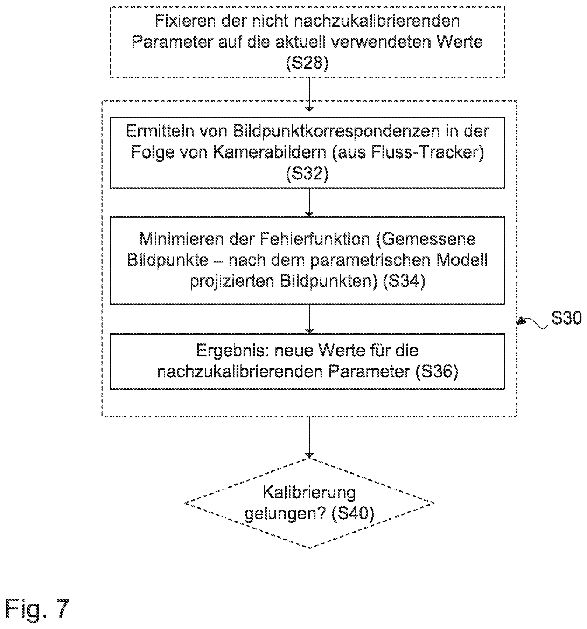

In Schritt S30 werden die freien bzw. nachzukalibrierenden Parameter (neu) geschätzt. Die Details werden später anhand von Fig. 7 erläutert. Im Wesentlichen werden der/die neue(n) Parameter durch die Minimierung einer Fehlerfunktion bestimmt.

Schritt S40 betrifft die Entscheidung, ob die Kalibrierung durch die neu geschätzten Parameter gelungen ist. Sofern die Fehlerfunktion einen Wert ausgibt, der über einem Schwellwert liegt, bedeutet dies, dass die Kalibrierung nicht gelungen ist und die neu geschätzten Parameter werden verworfen. Anschließend wird wieder mit Schritt S20 begonnen.

Falls die Fehlerfunktion einen Wert ausgibt, der den Schwellwert nicht überschreitet, gilt die Kalibrierung als gelungen und es schließt sich in Schritt S42 die Entscheidung an, ob eine Mehrdeutigkeit der geschätzten Parameter (der potentiell nachkalibrierten Parameter, also der vormals nachzukalibrierenden Parameter) vorliegt.

Falls der oder die geschätzten Parameter mehrdeutig sind, wird in Schritt S44 die Bibliothek für den aktuellen Kurventyp dahingehend aktualisiert, dass dieser Kurventyp zur Nachkalibrierung der (nicht eindeutig) geschätzten Parameter ungeeignet ist. Da die Parameter nicht eindeutig geschätzt werden konnten, werden in diesem Fall keine Parameter aktualisiert. Das Verfahren wird mit Schritt S20 fortgesetzt.

Falls dagegen der oder die geschätzten Parameter eindeutig sind, wird in Schritt S46 die Bibliothek für den aktuellen Kurventyp dahingehend aktualisiert, dass dieser Kurventyp für den/die nachkalibrierten (nachzukalibrierenden) Parameter geeignet ist. Eine Überprüfung, welche(r) Parameter besser als bisher bzw. "genau genug" geschätzt werden konnten, kann im Rahmen einer Kovarianzauswertung erfolgen. Diese wird im nächsten Absatz beispielhaft beschrieben. Mit anderen Worten wird der Kurvenschätzer dahingehend aktualisiert, dass er sich für diesen Kurventyp den/die Parameter merkt, der/die gut geschätzt werden konnten. Diese(r) Parameter wird bzw. werden aktualisiert und das Verfahren wird von Schritt S20 neu gestartet.

Natürlich können die aktualisierten oder alle aktuellen Parameter im Rahmen des Schritts S46 ausgegeben bzw. dann oder zu jedem erforderlichen Zeitpunkt ausgelesen werden und für Bildauswertungsfunktionen, Detektionsverfahren oder Kalibrier- oder Korrekturmechanismen verwendet werden.

**Beispielhafter Ablauf einer "genau genug"-Bewertung mit Kovarianzmatrix:**

Anschauliche Kurzfassung:

- Eine Kovarianzmatrix kann man sich durch einen n-Fehler Hyperellipsoiden vorstellen. Je nachdem, welche Wahrscheinlichkeitsmasse gefasst werden soll, ist dieses Ellipsoid größer oder kleiner skaliert (das kann man beispielsweise über Quantile angeben).
- Man lege einen zentrierten n-dimensionalen Quader über das n-Ellipsoid, mit Kantenlängen, die der akzeptablen Genauigkeitstoleranz entsprechen
- Alle Koordinaten-Richtungen (und damit die dazu korrespondierenden Parameter), bei denen die Ausdehnung des Ellipsoiden die Quadergrenze nicht überschreitet, passen, alle anderen wurden zu ungenau geschätzt.

Mit Formeln:

- Betrachte Quader $Q = X\_(i=1...L) [-b_i, b_i]$, $b_i = \sqrt{Chi^2_{L,p} * COV\_approx_{i,i}}$ (dieser umfasst das n-Fehler Hyperellipsoid zur Wahrscheinlichkeitsmasse $p$ vollständig und berührt es an den Seitenflächen) (X bezeichnet das kartesische Produkt und $Chi^2_{L,p}$ das p-Quantil der Chi^2 Verteilung mit L Freiheitsgraden)
- Damit die Anforderung in die i-te Koordinatenrichtung erfüllt ist, muss also lediglich geprüft werden:

$$\sqrt{Chi^2_{L,p} * COV\_approx_{i,i}} \leq a_i$$

wobei $Q_a = X\_(i=1...L) [-a_i, a_i]$, den Anforderungsquader bezeichnet.

**Stichpunktartige Beschreibung eines Ausführungsbeispiels und weiterer Aspekte des Verfahrens:**

- Man fährt mit dem Auto und bei jedem geschätzten Kurventyp schaut man, ob es ein neuer Kurventyp ist oder einer über den man schon was gelernt hat (diese Unterscheidung nur hier zur Veranschaulichung, die Unterscheidung ist nachher im Verfahren aufgrund der Schleife obsolet, da dort ein neuer Kurventyp einfach ein solcher ist, bei dem vom Erfahrungsstand her noch alle Parameter geschätzt werden können).
- Wenn neu: Berechne Parameterschätzung wie üblich (alle Parameter werden als variabel gehalten).
- Wenn bekannt: Schau in bisheriger gesammelter Information über die Parameter, ob es überhaupt Parameter gibt, die bei diesem Kurventyp nicht zu Mehrdeutigkeiten führen. Wenn ja, dann fixiere alle Parameter in der Kostenfunktion, welche gemäß den bisherigen Erfahrungen mit diesem Kurventyp zu Mehrdeutigkeiten geführt haben und berechne Schätzung für die freien Parameter.
  (Fixierung dabei auf die Werte, die bis dahin für diese Parameter verwendet wurden)
- Wenn Kalibrierung erfolgreich (z. B. RMSE, root square mean error, kleiner als ein gewisser Threshold), mache eine Analyse der Kovarianzmatrix. Das kann z. B. folgendermaßen aussehen

  • Berechne Eigenwerte und Eigenvektoren von $COV^{-1}$ ($P_{est}$\_approx) = $(f'(P_0)^T \Sigma^{-1} f'(P_0))$
  • **Zwischenbemerkung:** Hat $COV^{-1}$ den Eigenwert $\mu$, dann hat COV den Eigenwert $1/\mu$, der Eigenvektor bleibt dabei derselbe
  • Eigenvektoren zu Eigenwerten "nahe 0"/"zu klein" (solche die bei COV also Eigenvektoren zu sehr großen Eigenwerten wären → sehr große Unsicherheit) zeigen mit ihren Einträgen, die deutlich ungleich 0 sind, an, welche Parameter nicht gut zusammen geschätzt werden können (gibt also eine potentielle Gruppe von Parametern an, die nicht gut zusammen geschätzt werden können).

- Speichere diese Information für den aktuellen Kurventyp

→ fixiere beim nächsten Mal, wenn dieser Kurventyp auftaucht jeweils einen Parameter aus den nicht gemeinsam schätzbaren Gruppen (am besten einen solchen, mit großem Eintrag im Eigenvektor und am besten solche, die im Schnitt mehrerer Gruppen liegen).
→ Dann nach Schätzung mache wieder die gleiche Analyse für die nicht fixierten, also freien und damit geschätzten Parameter ( → auf diese Weise wird man zu einem schätzbaren Parametersatz "konvergieren").

Sobald (nach evtl. ein paar Iterationen) für denselben Kurventyp eine Schätzung erfolgt, bei der die Kovarianzanalyse für keinen der geschätzten Parameter eine Mehrdeutigkeit andeutet (bei den vorherigen Durchläufen, bei denen noch Mehrdeutigkeiten aus der Kovarianzanalyse kamen nicht updaten):

→ update alle die nicht fixierten, also freien und damit geschätzten Parameter, welche "genau genug" geschätzt wurden (zur Bewertung von "genau genug" kann wieder die Kovarianz verwendet werden, siehe Ausführung oben)

Fig. 7 illustriert Details zur Schätzung der Parameter S30. Nachdem die nicht nachzukalibrierenden Parameter auf die aktuell bzw. bislang verwendeten Werte fixiert worden sind, werden die nachzukalibrierenden Parameter (Schritt S30) folgendermaßen geschätzt:
In Schritt S32 werden beispielsweise durch den optischen Fluss Schätzer bzw. den Fluss Tracker Bildpunktkorrespondenzen in der Folge der Kamera Bilder ermittelt. Die extrinsischen Parameter bzw. eine Schätzung derselben kann durch den Kurvenschätzer bereitgestellt werden.
In Schritt S34 wird die Fehlerfunktion minimiert. Die Fehlerfunktion berücksichtigt die Abweichung der ermittelten bzw. gemessenen Bildpunkte von nach dem parametrischen Modell projizierten Bildpunkte für eine Mehrzahl von Bildern aus der Bildfolge.
Als Ergebnis werden in Schritt S36 die neuen Werte für die nachzukalibrierenden Parameter festgehalten.
Anschließend wird in Schritt S40 (vgl. Fig. 6) entschieden, ob die Kalibrierung gelungen ist.

## Patentansprüche

1. Verfahren zur Autokalibrierung einer Fahrzeugkamera (1; 31; 40) während einer Fahrt des Fahrzeugs (33), wobei durch die Fahrzeugkamera (1; 31; 40) ein Bereich der Umgebung (45; 46) des Fahrzeugs (33) durch eine Scheibe (32; 44) hindurch abgebildet wird, umfassend die Schritte:

   a) Bereitstellen eines Projektionsmodells der Fahrzeugkamera (1; 31; 40), ,
   b) Erfassen einer Folge von Bildern der Fahrzeugkamera (1; 31; 40) während einer Kurvenfahrt (5) des Fahrzeugs (33),,
   c) Bestimmen eines Kurventyps anhand der aktuellen Bewegung des Fahrzeugs (33) während der Kurvenfahrt (5) durch einen Kurvenschätzer,
   d) Schätzen der Parameter unter Berücksichtigung von

   - Bildpunkten in der Bilderfolge von stationären Objekten (45) in der Umgebung des Fahrzeugs (33),
   - der aktuellen Bewegung des Fahrzeugs (33), und
   - des bestimmten Kurventyps,
   und

   e) Ausgeben mindestens eines der geschätzten Parameter ($\theta_j$, int, $\psi$),

   **dadurch gekennzeichnet dass**,
   das Projektionsmodell als Parameter ($\theta_j$, int, $\psi$) mehrere extrinsische Parameter ($\theta_j$), mindestens einen intrinsischen Parameter (int) der Fahrzeugkamera (1; 31; 40) und mindestens einen die Scheibe (32; 44) charakterisierenden Parameter ($\psi$) umfasst, und die Parameter durch Minimieren einer Fehlerfunktion $I(\mathbf{s}_n, \theta_m, \text{int}, \psi)$, die die Abweichung von aus der Bilderfolge ermittelten Bildpunkten, die stationären Objekten (45) in der Fahrzeugumgebung entsprechen, von mittels des Projektionsmodells projizierten Bildpunkten ($p_{ij}$) der stationären Objekte (45) angibt, geschätzt werden.

2. Verfahren nach Anspruch 1, wobei nach dem Schritt des Schätzens der Parameter ($\theta_j$, $\psi$; int) überprüft wird, ob die Kalibrierung gelungen ist, anhand eines Schwellwerts für die minimierte Fehlerfunktion.

3. Verfahren nach Anspruch 2, wobei bei einer gelungenen Autokalibrierung eine Mehrdeutigkeitsanalyse dahingehend erfolgt, welche(r) Parameter ($\theta_j$; $\psi$; int) genau genug geschätzt wurde(n) und diese(r) Parameter ($\theta_j$; $\psi$; int) ausgegeben wird bzw. werden.

4. Verfahren nach einem der vorhergehenden Ansprüche, wobei zusätzlich zu den geschätzten Parametern ($\theta_j$; $\psi$; int) eine Information an eine Bibliothek ausgegeben wird, wobei die Bibliothek eine Zuordnung von durchfahrenen Kurventypen zu dabei jeweils schätzbaren Parametern umfasst, und wobei die ausgegebene Information angibt, ob und für welche(n) Parameter ($\theta_j$; $\psi$; int) eine eindeutige Schätzung für den aktuellen Kurventyp erfolgreich ist.

5. Verfahren nach einem der vorhergehenden Ansprüche, wobei eine Bewertung der Schätzbarkeit von nachzukalibrierenden Parametern für den aktuellen Kurventyp durch Nachsehen in der Bibliothek erfolgt und eine Schätzung des oder der nachzukalibrierenden Parameter ($\theta_j$; $\psi$; int) nur bei gegebener Schätzbarkeit vorgenommen wird.

6. Verfahren nach einem der der Ansprüche 3 bis 5, wobei die Mehrdeutigkeitsanalyse eine Kovarianzauswertung umfasst.

7. Verfahren nach einem der vorhergehenden Ansprüche, wobei eine Initialisierung der intrinsischen und/oder Scheiben-Parameter ($\psi$; int) erfolgt, wobei die Initialisierung dieser Parameter ($\psi$; int) aus einer Werkskalibrierung der Fahrzeugkamera (1; 31; 40) erfolgt.

8. Verfahren nach einem der vorhergehenden Ansprüche, wobei aus der aktuellen Bewegung des Fahrzeugs (33) während der Kurvenfahrt (5) eine Startlösung für die extrinsischen Parameter ($\theta_j$) bestimmt wird.

9. Verfahren nach einem der vorhergehenden Ansprüche, wobei eine Ermittlung von Bildpunkten oder Bildmerkmalen, die stationären Objekten (45) in der Fahrzeugumgebung entsprechen, aus der Bilderfolge mittels eines Optischen-Fluss-Schätzers (6) und/oder eines Fluss-Trackers (7) erfolgt.

10. Verfahren nach einem der vorhergehenden Ansprüche, wobei der mindestens eine die Scheibe (32; 44) charakterisierende Parameter ($\psi$) eine Dicke b der Scheibe umfasst.

11. Verfahren nach einem der vorhergehenden Ansprüche, wobei der mindestens eine die Scheibe charakterisierende Parameter ($\psi$) eine Richtung (n) der Scheibe (32; 44) umfasst.

12. Vorrichtung zur Autokalibrierung einer Fahrzeugkamera (1; 31; 40) während einer Fahrt des Fahrzeugs (33), umfassend

die Fahrzeugkamera (1; 31; 40), die dazu ausgebildet ist, einen Bereich der Umgebung (45; 46) des Fahrzeugs (33) durch eine Scheibe (32; 44) hindurch abzubilden;
eine Recheneinheit, die ausgebildet ist, ein Projektionsmodells der Fahrzeugkamera (1; 31; 40) bereitzustellen, die Fahrzeugkamera (1; 31; 40) dazu ausgebildet ist, eine Folge von Bildern während einer Kurvenfahrt (5) des Fahrzeugs (33) zu erfassen,
einen Kurvenschätzer, der dazu ausgebildet ist, einen Kurventyp anhand der aktuellen Bewegung des Fahrzeugs während der Kurvenfahrt (5) des Fahrzeugs (33) zu bestimmen;
die Recheneinheit dazu ausgebildet ist, Parameter zu schätzen unter Berücksichtigung von:

- Bildpunkten in der Bilderfolge von stationären Objekten (45) in der Umgebung des Fahrzeugs (33),
- der aktuellen Bewegung des Fahrzeugs (33), und
- des bestimmten Kurventyps,

und
eine Ausgabeeinheit zur Ausgabe der geschätzten Parameter ($\theta_k$, int, $\psi$),
**dadurch gekennzeichnet, dass**
das Projektionsmodell als Parameter ($\theta_j$, int, $\psi$) mehrere extrinsische Parameter ($\theta_j$), mindestens einen intrinsischen Parameter (int) der Fahrzeugkamera (1; 31; 40) und mindestens einen die Scheibe (32; 44) charakterisierenden Parameter ($\psi$) umfasst, und die Recheneinheit dazu ausgebildet ist, die Parameter durch Minimieren einer

Fehlerfunktion I($\mathbf{s}_i$, $\theta_k$, $\psi$), die die Abweichung von aus der Bilderfolge ermittelten Bildpunkten, die stationären Objekten (45) in der Fahrzeugumgebung entsprechen, von mittels des Projektionsmodells projizierten Bildpunkten ($p_{ij}$) der stationären Objekte (45) angibt, zu schätzen.

**13.** Fahrzeug (33) mit einer Fahrzeugkamera (1; 31; 40) und einer Vorrichtung nach Anspruch 12.

**14.** Computerprogrammelement, welches, wenn damit eine Datenverarbeitungseinheit programmiert wird, die Datenverarbeitungseinheit dazu anweist, ein Verfahren nach einem der Ansprüche 1 bis 11 durchzuführen.

**15.** Computerlesbares Speichermedium, auf dem ein Computerprogrammelement nach Anspruch 14 gespeichert ist.

**Claims**

**1.** Method for the autocalibration of a vehicle camera (1; 31; 40) during a journey of the vehicle (33), wherein an area of the environment (45; 46) of the vehicle (33) is imaged through a window (32; 44) by the vehicle camera (1; 31; 40), comprising the steps of:

a) providing a projection model of the vehicle camera (1; 31; 40),
b) capturing a sequence of images of the vehicle camera (1; 31; 40) while the vehicle (33) drives around a bend (5),
c) determining a type of bend based on the current movement of the vehicle (33) when driving around the bend (5) by means of a bend estimator,
d) estimating the parameters taking into account

- pixels in the image sequence of stationary objects (45) in the environment of the vehicle (33),
- the current movement of the vehicle (33), and
- the determined type of bend,

and
e) outputting at least one of the estimated parameters ($\theta_j$, int, $\psi$),

**characterized in that**
the projection model comprises as parameters ($\theta_j$, int, $\psi$) a plurality of extrinsic parameters ($\theta_j$), at least one intrinsic parameter (int) of the vehicle camera (1; 31; 40) and at least one parameter ($\psi$) characterizing the window (32; 44), and the parameters are estimated by minimizing an error function I($s_n$, $\theta_m$, int, $\psi$) which indicates the deviation of pixels, which are determined from the image sequence and correspond to stationary objects (45) in the vehicle environment, from pixels ($p_{ij}$) of the stationary objects (45) projected by means of the projection model.

**2.** Method according to Claim 1, wherein, after the step of estimating the parameters ($\theta_j$, $\psi$; int), it is checked whether the calibration has been successful based on a threshold value for the minimized error function.

**3.** Method according to Claim 2, wherein, in the case of successful autocalibration, an ambiguity analysis is carried out so as to determine which parameter(s) ($\theta_j$; $\psi$; int) has/have been estimated accurately enough and this/these parameter(s) ($\theta_j$; $\psi$; int) is or are output.

**4.** Method according to one of the preceding claims, wherein, in addition to the estimated parameters ($\theta_j$; $\psi$; int), information is output to a library, wherein the library comprises an assignment of types of bend that have been driven through to parameters that can be estimated in each case, and wherein the output information indicates whether and for which parameter(s) ($\theta_j$; $\psi$; int) a clear estimate has been successful for the current type of bend.

**5.** Method according to one of the preceding claims, wherein the ability to estimate parameters to be recalibrated for the current type of bend is assessed by looking in the library and the parameter(s) ($\theta_j$; $\psi$; int) to be recalibrated is/are estimated only when there is the ability to estimate them.

**6.** Method according to one of Claims 3 to 5, wherein the ambiguity analysis comprises a covariance evaluation.

**7.** Method according to one of the preceding claims, wherein the intrinsic and/or window parameters ($\psi$; int) are

initialized, wherein these parameters ($\psi$; int) are initialized from a factory calibration of the vehicle camera (1; 31; 40).

8. Method according to one of the preceding claims, wherein a starting solution for the extrinsic parameters ($\theta_j$) is determined from the current movement of the vehicle (33) when driving around the bend (5).

9. Method according to one of the preceding claims, wherein pixels or image features, which correspond to stationary objects (45) in the vehicle environment, are determined from the image sequence by means of an optical flow estimator (6) and/or a flow tracker (7).

10. Method according to one of the preceding claims, wherein the at least one parameter ($\psi$) characterizing the window (32; 44) comprises a thickness b of the window.

11. Method according to one of the preceding claims, wherein the at least one parameter ($\psi$) characterizing the window comprises a direction (n) of the window (32; 44).

12. Device for the autocalibration of a vehicle camera (1; 31; 40) during a journey of the vehicle (33), comprising

the vehicle camera (1; 31; 40) which is designed to image an area of the environment (45; 46) of the vehicle (33) through a window (32; 44);
a computing unit which is designed to provide a projection model of the vehicle camera (1; 31; 40),
the vehicle camera (1; 31; 40) being designed to capture a sequence of images while the vehicle (33) drives around a bend (5),
a bend estimator which is designed to determine a type of bend based on the current movement of the vehicle while the vehicle (33) drives around the bend (5); the computing unit being designed to estimate parameters taking into account:

- pixels in the image sequence of stationary objects (45) in the environment of the vehicle (33),
- the current movement of the vehicle (33), and
- the determined type of bend,

and an output device for outputting the estimated parameters ($\theta_k$, int, $\psi$),
**characterized in that**
the projection model comprises as parameters ($\theta_j$, int, $\psi$) a plurality of extrinsic parameters ($\theta_j$), at least one intrinsic parameter (int) of the vehicle camera (1; 31; 40) and at least one parameter ($\psi$) characterizing the window (32; 44), and the computing unit is designed to estimate the parameters by minimizing an error function $l(s_i, \theta_k, \psi)$ which indicates the deviation of pixels, which are determined from the image sequence and correspond to stationary objects (45) in the vehicle environment, from pixels ($p_{ij}$) of the stationary objects (45) projected by means of the projection model.

13. Vehicle (33) having a vehicle camera (1; 31; 40) and a device according to Claim 12.

14. Computer program element which, when a data processing unit is programmed with it, instructs the data processing unit to carry out a method according to one of Claims 1 to 11.

15. Computer-readable storage medium on which a computer program element according to Claim 14 is stored.


**Revendications**

1. Procédé d'autoétalonnage d'une caméra de véhicule (1 ; 31 ; 40) pendant un trajet du véhicule (33), une zone de l'environnement (45 ; 46) du véhicule (33) à travers une vitre (32 ; 44) étant reproduite par la caméra de véhicule (1 ; 31 ; 40), comprenant les étapes suivantes :

a) mise à disposition d'un modèle de projection de la caméra de véhicule (1 ; 31 ; 40),
b) acquisition d'une séquence d'images de la caméra de véhicule (1 ; 31 ; 40) pendant un trajet en virage (5) du véhicule (33),
c) détermination d'un type de virage à l'aide du mouvement actuel du véhicule (33) pendant le trajet en virage (5) par un estimateur de virage,

d) estimation des paramètres en tenant compte de

- pixels dans la séquence d'images d'objets (45) stationnaires dans l'environnement du véhicule (33),
- le mouvement actuel du véhicule (33), et
- le type de virage déterminé,

et

e) délivrance en sortie d'au moins l'un des paramètres estimés ($\theta_j$, int, $\psi$),

**caractérisé en ce que**
le modèle de projection en tant que paramètres ($\theta_j$, int, $\psi$) comporte plusieurs paramètres extrinsèques ($\theta_j$), au moins un paramètre intrinsèque (int) de la caméra de véhicule (1 ; 31 ; 40) et au moins un paramètre ($\psi$) qui caractérise la vitre (32 ; 44), et les paramètres sont estimés en minimisant une fonction d'erreur l($\mathbf{s}_n$, $\theta_m$, int, $\psi$) qui indique l'écart entre les pixels identifiés à partir de la séquence d'images, qui correspondent aux objets (45) stationnaires dans l'environnement du véhicule, et les pixels ($p_{ij}$) des objets (45) stationnaires projetés au moyen du modèle de projection.

2. Procédé selon la revendication 1, un contrôle étant effectué après l'étape d'estimation des paramètres ($\theta_j$, $\psi$ ; int), afin de vérifier si l'étalonnage a réussi, à l'aide d'une valeur seuil pour la fonction d'erreur minimisée.

3. Procédé selon la revendication 2, une analyse d'ambiguïté étant effectuée dans le cas d'un autoétalonnage réussi afin de déterminer quel(s) paramètre(s) ($\theta_j$ ; $\psi$ ; int) a (ont) été estimé(s) avec suffisamment de précision et ce(s) paramètre(s) ($\theta_j$ ; $\psi$ ; int) étant alors délivrés en sortie.

4. Procédé selon l'une des revendications précédentes, une information étant délivrée à une bibliothèque en plus des paramètres ($\theta_j$ ; $\psi$ ; int) estimés, la bibliothèque comprenant une attribution de types de virages parcourus à des paramètres respectivement estimables, et l'information délivrée indiquant si et pour quel(s) paramètre(s) ($\theta_j$ ; $\psi$ ; int) une estimation univoque pour le type de virage actuel est réussie.

5. Procédé selon l'une des revendications précédentes, une évaluation de l'aptitude à l'estimation des paramètres à réétalonner pour le type de virage actuel étant effectuée par consultation de la bibliothèque et une estimation du ou des paramètres ($\theta_j$ ; $\psi$ ; int) à réétalonner n'étant effectuée que pour une aptitude à l'estimation donnée.

6. Procédé selon l'une des revendications 3 à 5, l'analyse d'ambiguïté comprenant une évaluation de covariance.

7. Procédé selon l'une des revendications précédentes, une initialisation des paramètres ($\psi$ ; int) intrinsèques et/ou de vitre étant effectuée, l'initialisation de ces paramètres ($\psi$ ; int) étant effectuée à partir d'un étalonnage en usine de la caméra de véhicule (1 ; 31 ; 40).

8. Procédé selon l'une des revendications précédentes, une solution de départ pour les paramètres extrinsèques ($\theta_j$) étant déterminée à partir du mouvement actuel du véhicule (33) pendant le trajet en virage (5).

9. Procédé selon l'une des revendications précédentes, une identification de pixels ou de caractéristiques d'image qui correspondent à des objets (45) stationnaires dans l'environnement du véhicule étant effectuée à partir de la séquence d'images au moyen d'un estimateur de flux optique (6) et/ou d'un suiveur de flux (7).

10. Procédé selon l'une des revendications précédentes, l'au moins un paramètre ($\psi$) qui caractérise la vitre (32 ; 44) comprenant une épaisseur b de la vitre.

11. Procédé selon l'une des revendications précédentes, l'au moins un paramètre ($\psi$) qui caractérise la vitre (32 ; 44) comprenant une direction (n) de la vitre.

12. Dispositif d'autoétalonnage d'une caméra de véhicule (1 ; 31 ; 40) pendant un trajet du véhicule (33), comprenant

la caméra de véhicule (1 ; 31 ; 40), qui est configurée pour reproduire une zone de l'environnement (45 ; 46) du véhicule (33) à travers une vitre (32 ; 44) ;
une unité de calcul, qui est configurée pour mettre à disposition un modèle de projection de la caméra de véhicule (1 ; 31 ; 40),
la caméra de véhicule (1 ; 31 ; 40) est configurée pour acquérir une séquence d'images pendant un trajet en virage (5) du véhicule (33),
un estimateur de virage, qui est configuré pour déterminer un type de virage à l'aide du mouvement actuel du véhicule pendant le trajet en virage (5) du véhicule (33) ;
l'unité de calcul est configurée pour estimer des paramètres en tenant compte de :

- pixels dans la séquence d'images d'objets (45) stationnaires dans l'environnement du véhicule (33),
- le mouvement actuel du véhicule (33), et
- le type de virage déterminé,

et une unité de sortie destinée à délivrer les paramètres ($\theta_k$, int, $\psi$) estimés, **caractérisé en ce que** le modèle de projection en tant que paramètres ($\theta_j$, int, $\psi$) comporte plusieurs paramètres extrinsèques ($\theta_j$), au moins un paramètre intrinsèque (int) de la caméra de véhicule (1 ; 31 ; 40) et au moins un paramètre ($\psi$) qui caractérise la vitre (32 ; 44), et l'unité de calcul est configurée pour estimer les paramètres en minimisant une fonction d'erreur $I(s_i, \theta_k, \psi)$ qui indique l'écart entre les pixels identifiés à partir de la séquence d'images, qui correspondent aux objets (45) stationnaires dans l'environnement du véhicule, et les pixels ($p_{ij}$) des objets (45) stationnaires projetés au moyen du modèle de projection.

13. Véhicule (33) équipé d'une caméra de véhicule (1 ; 31 ; 40) et d'un dispositif selon la revendication 12.

14. Élément de programme informatique qui, lorsqu'une unité de traitement de données est programmée avec celui-ci, ordonne à l'unité de traitement de données de mettre en œuvre un procédé selon l'une des revendications 1 à 11.

15. Support d'enregistrement lisible par ordinateur sur lequel est enregistré un élément de programme informatique selon la revendication 14.

# Fig. 1

## Fig. 2

**Eintritt in die Kurve (23)**

**Kurvenfahrt (25)**

**Austritt aus der Kurve (24)**

**(22) Kurvenwinkel**

α

**(21) Kurvenradius**

**Bewegungsrichtung**

**(26) Fahrtgeometrie**

EP 4 445 334 B1

Fig. 3

EP 4 445 334 B1

Fig. 4

Festlegen eines Modells zur Beschreibung der Abbildung einer Fahrzeugumgebung durch eine Kamera hinter der Windschutzscheibe mit Parametern (int, ψ) (S10)

Festlegen einer Fehlerfunktion, welche die Bewegung des Fahrzeugs berücksichtigt, das Abbildungsmodell und die Positionen von Merkmalen in einer Bilderfolge mit extrinsischen Parametern ($θ_i$) der Kamera (S12)

Initialisieren der Parameter (S14)

Bereitstellen einer Bibliothek, die eine Zuordnung von durchfahrenen Kurventypen zu dabei schätzbaren Parametern umfasst (S16)

Start des iterativen Verfahrens (S18)

Fig. 5

Start des iterativen Verfahrens (S18)

Bereitsstellen einer Folge von Bildern, die während einer aktuellen Kurvenbewegung erfasst worden sind (S20)

Schätzung des Kurventyps der aktuellen Kurvenbewegung (S22)

Bewertung der Schätzbarkeit von nachzukalibrierenden Parametern für den Kurventyp durch Nachsehen in der Bibliothek (S24)

Schätzbarkeit gegeben? (S26)

NEIN

JA

Fixieren der nicht nachzukalibrierenden Parameter auf die aktuell verwendeten Werte (S28)

Schätzung der nachzukalibrierenden Parameter (S30)

Kalibrierung gelungen? (S40)

NEIN

JA

Update der nachzukalibrierenden Parameter und Update der Bibliothek: Kurventyp geeignet (S46)

Mehrdeutigkeit? (S42)

NEIN

JA

Update der Bibliothek: Kurventyp ungeeignet (S44)

Fig. 6

Fixieren der nicht nachzukalibrierenden
Parameter auf die aktuell verwendeten Werte
(S28)

Ermitteln von Bildpunktkorrespondenzen in der
Folge von Kamerabildern (aus Fluss-Tracker)
(S32)

Minimieren der Fehlerfunktion (Gemessene
Bildpunkte – nach dem parametrischen Modell
projizierten Bildpunkten) (S34)

S30

Ergebnis: neue Werte für die
nachzukalibrierenden Parameter (S36)

Kalibrierung
gelungen? (S40)

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018204451 A1
- WO 2021004642 A1
- DE 102016222548 A1
- EP 3293701 B1

**In der Beschreibung aufgeführte Nicht-Patentliteratur**

- **HARTLEY, ZISSERMANN**. Multiple View Geometry in Computer Vision. Cambridge University Press, 2000
- **PETER STURM**. Critical motion sequences for monocular self-calibration and uncalibrated euclidean reconstruction. *CVPR*, 1997, 1100-1105
- **C. WU**. Critical configurations for radial distortion self-calibration.. *CVPR*, 2014